(19) Europäisches Patentamt
European Patent Office
Office européen des brevets

(11) **EP 3 155 732 B1**

(12) # EUROPÄISCHE PATENTSCHRIFT

(45) Veröffentlichungstag und Bekanntmachung des Hinweises auf die Patenterteilung:
**07.08.2019 Patentblatt 2019/32**

(21) Anmeldenummer: **15741496.2**

(22) Anmeldetag: **15.06.2015**

(51) Int Cl.:
*H04B 10/116* (2013.01)          *H04N 5/225* (2006.01)
*H04N 7/025* (2006.01)

(86) Internationale Anmeldenummer:
**PCT/EP2015/001198**

(87) Internationale Veröffentlichungsnummer:
**WO 2015/188948 (17.12.2015 Gazette 2015/50)**

(54) **OPTISCHE FREIRAUMÜBERTRAGUNG**

OPTICAL FREE-SPACE TRANSMISSION

TRANSMISSION OPTIQUE DANS L'ESPACE LIBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2014 DE 102014008405**

(43) Veröffentlichungstag der Anmeldung:
**19.04.2017 Patentblatt 2017/16**

(73) Patentinhaber: **Technische Universität Dortmund**
**44227 Dortmund (DE)**

(72) Erfinder: **KAYS, Rüdiger**
**59348 Lüdingshausen (DE)**

(74) Vertreter: **Cohausz Hannig Borkowski Wißgott Patent- und Rechtsanwaltskanzlei**
**Schumannstrasse 97-99**
**40237 Düsseldorf (DE)**

(56) Entgegenhaltungen:
**US-A1- 2005 264 694     US-A1- 2009 175 594**
**US-A1- 2011 063 510     US-B1- 6 661 905**

- **KAYS RUEDIGER: "Visible light communication using TV displays and video cameras", 2015 IEEE INTERNATIONAL CONFERENCE ON CONSUMER ELECTRONICS (ICCE), IEEE, 9. Januar 2015 (2015-01-09), Seiten 554-555, XP032749855, DOI: 10.1109/ICCE.2015.7066522 [gefunden am 2015-03-23]**
- **Kensuke Kuraki ET AL: "Data Transfer Technology to Enable Communication between Displays and Smart Devices", vol. 50, No. 1, 1. Januar 2014 (2014-01-01), Seiten 40-45, XP055216573, Gefunden im Internet: URL:http://www.fujitsu.com/global/documents/about/resources/publications/fstj/archives/vol50-1/paper07.pdf [gefunden am 2015-09-28]**
- **Grace Woo ET AL: "Simple LCD Transmitter Camera Receiver Data Link", , 15. Juni 2009 (2009-06-15), XP055216644, Gefunden im Internet: URL:http://dspace.mit.edu/bitstream/handle/1721.1/45565/paper.pdf?sequence=1 [gefunden am 2015-09-28]**

**Beschreibung**

Die vorliegende Erfindung betrifft ein Verfahren zur optischen Übertragung von Daten im freien Raum von einem Sender zu mindestens einem Empfänger. Des Weiteren betrifft die Erfindung eine bildgebende Vorrichtung zur Durchführung der erfindungsgemäßen Übertragung der Daten sowie eine Kamera zum Empfang der übertragenen Daten.

Unter der sogenannten "optischen Freiraumübertragung" wird die Übertragung von Daten durch optische Strahlung, insbesondere durch Licht oder Infrarot-Strahlung verstanden. Die klassische Freiraumübertragung verwendet Leuchtdioden für den Übertragungszweck, da diese Strahlungsquellen in ihrer Intensität einfach moduliert werden können und Intensitätsänderungen mit einer hohen Flankensteilheit erreichbar sind. Hierzu gibt es eine Vielzahl von Ansätzen. Die Sekundärnutzung von Raumbeleuchtungen ist ein derzeit noch exotischer Spezialfall. Durch die Fortschritte der LED-Technologie ist die optische Freiraumübertragung seit einigen Jahren ein wichtiges Thema im Bereich der Forschung und Entwicklung.

So wurde im Standardkomitee des IEEE in der Arbeitsgruppe für lokale drahtlose Netzwerke im Jahre 2011 der internationale Standard für "Short-Range Wireless Optical Communication Using Visible Light" verabschiedet (IEEE 802.15.7-2011). Dort werden unter Einsatz von LEDs als Sender und Photodioden als Empfänger verschiedene Varianten einer Datenübertragung spezifiziert. Von besonderem Interesse ist dort die Nutzung von LED-Beleuchtungseinrichtungen, deren Emission für den Menschen unsichtbar mit Daten moduliert wird. Damit ist eine Doppelfunktion gegeben: Neben der Raumbeleuchtung kann die Lichtquelle gleichzeitig als Datenquelle dienen.

Ähnliche Ansätze lassen sich auch für andere Übertragungsaufgaben nutzen. So ist im Stand der Technik die Modulation des LED-Rücklichts von Fahrzeugen angedacht worden, um Daten zwischen PKW auszutauschen und z.B. nachfolgende Fahrzeuge über vorausbefindliche Gefahrensituationen zu informieren.

Die Vorteile der optischen Übertragung bestehen darin, dass ohne Probleme mit elektromagnetischer Interferenz, Abhörrisiken und ohne jegliche Gesundheitsgefährdung leistungsfähige Verfahren der drahtlosen Übertragung möglich werden.

Diesen Techniken ist gemeinsam, dass das Ansteuersignal einer oder mehrerer Leuchtdioden durch eine Datenfolge moduliert wird. Die erzielbaren Datenraten sind dabei aus technologischen Gründen relativ begrenzt. Aus diesem Grunde sind bereits Ansätze zur Parallelisierung der Freiraumübertragung durch Verwendung mehrerer Lichtquellen bekannt, deren Ansteuersignale jeweils durch eine eigene Datenfolge moduliert werden. Auf diese Weise kann die Datenrate entsprechend der Anzahl verwendeter Lichtquellen vervielfacht werden.

Aus der US-Anmeldung 2005/0264694 A1 ist es bekannt, zur optischen Übertragung von Daten im freien Raum einen TV-Bildschirm zu verwenden, bei dem die Daten auf die Scan-Zeilen aus einzelnen Pixeln mittels sogenannter 2-FSK oder 4-FSK Modulation (Frequency-Shift-Keying) aufmoduliert werden, wobei bei 2-FSK ein erster Frequenzsatz eine logische "1" und ein zweiter Frequenzsatz eine logische "0" beschreibt. Die Helligkeit der Zeilen wird dann gemäß dem dem zu übertragenden Datenbit entsprechenden Frequenzsatz moduliert, wobei eine auf den TV-Bildschirm gerichtete Photodiode die Helligkeitsschwankungen detektiert, und aus diesen mittels einer Fourier-Transformation die Frequenzen zur Kodierung des entsprechenden Datenbits ermittelt werden. Diese Verfahrensweise führt zu einer vergleichsweise geringen Datenübertragungsrate.

US-Anmeldung US6661905-B1 bezieht sich auf die Übertragung von Daten auf einem Videosignal und insbesondere auf die Übertragung von Daten auf dem sichtbaren Teil eines analogen Videosignals.

Es ist Aufgabe der vorliegenden Erfindung ein Verfahren zur optischen Freiraumdatenübertragung zu schaffen, das besonders hohe Übertragungsraten ermöglicht.

Diese Aufgabe wird durch das Verfahren nach Anspruch 1 und Vorrichtungen nach den Ansprüchen 10 und 12 gelöst. Vorteilhafte Weiterbildungen der Erfindung sind in den jeweiligen Unteransprüchen angegeben.

Erfindungsgemäß wird ein Verfahren zur optischen Übertragung von Daten im freien Raum von einem Sender zu einem Empfänger vorgeschlagen, bei dem der Sender eine bildgebende Vorrichtung mit einer Vielzahl an Pixeln ist, die von Bilder repräsentierenden Bilddaten einer Bildfolge angesteuert werden, und die zur Übertragung vorgesehenen Daten in eine Datenfolge aus einer eine Anzahl Datenbits umfassender Pakete aufgeteilt werden und jedes Datenbit mindestens einem der Pixel zugeordnet wird, und wobei die Datenpakete jeweils auf die Bilddaten mindestens eines Bildes der Bildfolge aufmoduliert werden.

Die Bilddaten enthalten die zur Darstellung eines Bildes benötigten Daten, geeigneterweise in Form von Leuchtdichtewerten für die anzusteuernden Pixel. Die Bildfolge besitzt eine bestimmte Bildfrequenz, mit der die Pixel angesteuert werden. Erfindungsgemäß ist vorgesehen, dass die zur Übertragung bestimmten Daten in eine Anzahl von Datenpakete aufgeteilt werden, die wiederum jeweils aus einer Vielzahl Datenbits bestehen, welche anschließend dem Bildsignal aufmoduliert werden. Dies bedeutet, dass jedes Paket auf die Bilddaten mindestens eines Bildes aufmoduliert wird, d.h. die Datenbits eines jeden Pakets in jeweils einem der von der bildgebenden Vorrichtung dargestellten Bilder codiert werden bzw. codiert sind. Im Hinblick auf die Signalverarbeitung bedeutet dies, dass jedes Datenbit eines Pakets den von den jeweiligen Bilddaten für genau ein bestimmtes Pixel vorgegebenen Leuchtdichtewert ändert. Die Gesamtheit der Datenpakete umfasst dann die zu übertragenden Daten. Die Aufmodulation der Datenbits hat also zur Folge, dass die zu übertragenden Daten in den Änderungen der Lichtemissionen der Pixel codiert sind.

Zur begrifflichen Verständlichkeit sei ausgeführt, dass Bilddaten zunächst nur ein einziges Bild repräsentieren, d.h. aus einer Vielzahl von Leuchtdichtewerten zur Visualisierung des Bildes zu einem bestimmten Zeitpunkt bestehen, wobei die Leuchtdichtewerte jeweils ein Pixel ansteuern. Die zeitliche Abfolge von Leuchtdichtewerten, die jeweils dasselbe Pixel ansteuern, wird als Teilbildsignal verstanden. Die Bilddaten stellen somit eine Vielzahl von Teilbildsignalen für einen bestimmten Zeitpunkt dar. Die Bilddaten selbst definieren das Bild folglich nur örtlich. Sie sind nicht zeitabhängig. Die Teilbildsignale und die Bildfolge sind dagegen zeitabhängig. Dabei bezieht sich ein Teilbildsignal auf den zeitlichen Leuchtdichteverlauf eines einzelnen Pixels, d.h. es ist pixelbezogen, wohingegen sich die Bildfolge als zeitliche Folge von Bildern auf die Gesamtheit aller Pixel bezieht, also alle Teilbildsignale umfasst.

In entsprechender Weise besteht ein Datenpaket aus der Vielzahl Datenbits, die jeweils einem Pixel zugeordnet sind und dessen Leuchtdichtewert um einen bestimmten Betrag ändern. Die zeitliche Abfolge der Beträge der Leuchtdichteänderungen, die die Helligkeit jeweils desselben Pixels ändern, wird als ein Datenteilsignal verstanden. Ein Datenpaket stellt somit eine Vielzahl von Datenteilsignalen für einen bestimmten Zeitpunkt dar. Ein Datenpaket definiert folglich in räumlicher Dimension, um welchen Betrag die Leuchtdichte der einzelnen Pixel geändert werden soll. Es ist nicht zeitabhängig. Das Datenteilsignal und die Datenfolge sind dagegen zeitabhängig. Dabei bezieht sich das Datenteilsignal auf den sich zeitlich ändernden Betrag der Leuchtdichte eines einzelnen Pixels, d.h. es ist pixelbezogen, wohingegen sich die Datenfolge als zeitliche Folge von Datenpaketen auf die Gesamtheit aller Pixel bezieht.

Der Kerngedanke der Erfindung besteht darin, im Vergleich zu bekannten Systemen der optischen Freiraumübertragung, die nur eine oder wenige Lichtquellen benutzen, auf welche die zu übertragenden Daten moduliert werden, eine multiparallele optische Freiraumübertragung zu realisieren. Dies wird gerade durch bildgebende Vorrichtungen mit gerasterter Bildschirmfläche möglich, die aus einer sehr großen Anzahl so genannter Pixel bestehen, von denen jedes einzelne Pixel zur optischen Freiraumübertragung grundsätzlich verwendet werden kann und bestenfalls im Rahmen der Erfindung auch genutzt wird. Durch diesen Multiparallelbetrieb ist eine Vervielfachung der Übertragungsdatenrate möglich. Gleichzeitig kann die Übertragung derartig gestaltet werden, dass sie für den Betrachter verdeckt ist und zeitgleich zu der Bild- oder Videowiedergabe an der bildgebenden Vorrichtung erfolgt.

Die bildgebende Vorrichtung kann ein Fernseher, Computermonitor, ein Tablet oder ein beliebiges aus einzeln ansteuerbaren Pixeln bestehendes Display sein, das geeignet ist, Bilder darzustellen. Die aus den leuchtenden Pixeln gebildete Bildfläche bildet den Bildschirm der bildgebenden Vorrichtung, der insbesondere ein Flachbildschirm sein kann. Die Bildfläche ist für den Betrachter frei einsehbar. Das Verfahren ist nicht auf die Verwendung einer speziellen Bildtechnologie beschränkt. So können sowohl Flachbildschirme mit Plasma-Technologie, als auch in LCD, LED und OLED-Technologie genutzt werden. Bildgebende Vorrichtungen mit LEDs oder OLEDs als Pixel sind besonders geeignet, weil sie eine hohe Flankensteilheit beim Erreichen einer spezifischen Helligkeit aufweisen und eine aufmodulierte Datenfolge nur geringfügig zeitlich gefiltert wird.

Vorzugsweise kann die Anzahl der Datenbits der Datenpakete der Anzahl der Pixel der bildgebenden Vorrichtung entsprechen, so dass jedes Pixel individuell moduliert angesteuert wird. Dies bedeutet, dass jedes ein einzelnes Pixel ansteuernde Teilbildsignal durch jeweils ein Datenteilsignal moduliert wird. So ist letztendlich die Lichtemission jedes Teilbildsignals moduliert, und die zu übertragenden Daten werden parallel in den Lichtemissionen aller Pixel codiert übertragen. Es wird folglich ein Parallelbetrieb realisiert, bei dem eine individuelle Modulation der Lichtemission jedes Pixels der bildgebenden Vorrichtung erfolgt.

Dieser Parallelbetrieb bietet ein immenses Potential zur Übertragung mit hohen Datenraten.

Bei Flachbildschirmen mit einer sehr hohen räumlichen Auflösung von z.B. 1920x1080 Pixel, die heutzutage für Videos, d.h. Filme und Serien in HDTV (High Definition Television) üblich ist, stehen je Farbe somit mehr als 2 Millionen Pixel, d.h. 2 Millionen Sender zur Verfügung, die unabhängig voneinander gleichzeitig ein individuell moduliertes optisches Signal aussenden können. Wenn auch die Modulationsfrequenz der Pixel durch die Bildfrequenz der Wiedergabeeinrichtung auf relativ geringe Werte von z.B. 100 Hz begrenzt ist, kann durch den extrem hohen Parallelisierungsgrad eine sehr hohe Datenrate erzielt werden.

Unter Berücksichtigung, dass die Bildwiedergabe bei Flachbildschirmen mit einer entsprechenden Bildfrequenz von beispielsweise 200Hz, d.h. 200 Bildern pro Sekunde erfolgt, obwohl wegen der begrenzten zeitlichen Auflösung des menschlichen Gesichtssinns auch bei kritischem Bildmaterial deutlich kleinere Bildfrequenzen ausreichend sind, könnten grundsätzlich über jedes Pixel auch 200 Bits pro Sekunden übertragen werden. Dies würde jedoch das visuelle Erlebnis des gleichzeitig mit den übertragenen Daten auf der bildgebenden Vorrichtung wiedergegebenen Bildes oder Videos beeinträchtigen.

Um diese Beeinträchtigung zu vermeiden, ist zu bevorzugen, dass die Modulation differenziell erfolgt. Dies kann zeitlich differenziell, räumlich differenziell oder farblich differenziell geschehen. Unter einer differenziellen Modulation ist zu verstehen, dass eine zu übertragende Information auf zwei Amplitudenwerte aufgeteilt und erst die Bildung der Differenz dieser Amplitudenwerte die übertragene Information zurückgewinnen lässt. In der konventionellen Datenübertragungstechnik wird diese Art der Modulation z.B. bei der Manchester-Codierung realisiert. Eine Information ist in Sinne der Erfindung beispielsweise ein Datenbit eines Datenpaketes. Träger der Information kann bei einer zeitlich differenziellen Modulation ein einzelnes Pixel sein, dessen Leuchtdichte oder Farbe zu zwei verschiedenen, insbesondere aufeinander folgenden Zeitpunkten betrachtet wird. Träger der Information können bei einer räumlichen differenziellen Modulation zwei einzelne, insbesondere nebeneinander liegende Pixel sein, deren Leuchtdichteunterschied oder Farbunterschied zum selben Zeitpunkt betrachtet wird. Im Falle der zeitlichen und räumlichen Modulation kann entweder die Leuchtdichte eines Pixels oder dessen Farbigkeit moduliert werden.

Für eine zeitlich differenzielle Modulation wird vorgeschlagen, dass in der Bildfolge zwei auf einander folgende Bilder mit gleichen Bilddaten versehen werden, wobei die Aufmodulation der Datenfolge den Bildinhalt der beiden Bilder derart ändert, dass die Differenz der beiden Bilder in jedem Pixel dem Wert des von dem jeweiligen Pixel jeweils zu übertragenden Datenbit entspricht und das Mittel der beiden Bilder für jedes Pixel gleich bleibt.

Dies bedeutet, dass ein Datenbit nicht einem einzigen Bild sondern zwei Bildern zugeordnet wird, die quasi ein Doppelbild bilden. Das Datenbit kann beispielsweise hälftig mit entgegengesetzten Vorzeichen den das eine und das andere Bild repräsentierenden Bilddaten des Doppelbildes hinzugefügt werden. Ein Teil des Datenbits wird dann dem ersten Bild des Doppelbildes beispielsweise hinzuaddiert und von dem anderen Bild des Doppelbildes subtrahiert. Die Differenz der die beiden Bilder repräsentierenden Bilddaten entspricht dann weiterhin für jedes Pixel dem jeweils zu übertragenden Datenbit. Gleichzeitig ist aber der darzustellende Bildinhalt im Mittel nicht verändert, so dass ein Betrachter keinen Unterschied wahrnimmt. Damit ist die Modulation für den menschlichen Betrachter unsichtbar. Die visuelle Wahrnehmung des auf der bildgebenden Vorrichtung eigentlich darzustellenden Bildes oder Videos wird somit nicht beeinträchtigt. Die Videopräsentation läuft weiter, während im Hintergrund Daten mit hoher Rate zu wenigstens einem Empfänger übertragen werden, der auf den Bildschirm der bildgebenden Vorrichtung gerichtet ist.

Im Ergebnis bedeutet die differenzielle zeitliche Modulation, dass je zwei ein Bildpaar bildende Bilder zur Übertragung eines Bits pro Pixel verwendet werden. Sofern das Bildsignal mit einer Bildfrequenz von 200 Hz wiedergegeben wird, können dementsprechend nur maximal 100 Bit/s pro Pixel übertragen werden.

Wird nun jedes Pixel eines hochauflösenden Bildschirms so moduliert, dass jeweils 100 Bit/s übertragen werden, so liefert ein HDTV-Bildschirm mit ca. 2 Millionen Pixeln eine Datenrate von 200 Mbit/s.

Die Implementierung einer solchen Modulation ist mit den in aktuellen Flachbildfernsehern vorhandenen Schaltkreisen mit begrenztem zusätzlichen Hardwareaufwand möglich. Moderne Geräte besitzen bereits die dazu erforderlichen Bildspeicher und leistungsfähige Signalprozessoren, um Zwischenbilder zu berechnen oder stereoskopische Perspektiven zu synthetisieren. Es muss lediglich eine Schnittstelle für die Dateneingabe physikalisch realisiert werden.

Die zeitlich differenzielle Modulation der Lichtemission der Pixel kann beispielsweise im Hinblick auf ihre Leuchtdichte oder im Hinblick auf ihre Farbe erfolgen.

Im Fall der Modulation der Leuchtdichte, kann einem Datenbit "1" ein bestimmter Leuchtdichtedifferenzwert, alternativ Modulationswert genannt, zugeordnet sein. Dieser kann absolut oder relativ vorgegeben sein. Er kann beispielsweise 2% bis 10% der Maximalleuchtdichte der Pixel betragen.

Für die zeitlich differenzielle Modulation bedeutet dies, dass, beispielsweise bei einem Leuchtdichtedifferenzwert von 4% der Maximalhelligkeit, das entsprechende Pixel im ersten Bild des Doppelbildes eine um 2% höhere Helligkeit erhält und dasselbe Pixel im zweiten Bild des Doppelbildes eine um 2% geringere Leuchtdichte erhält. Im Mittel sind dann die Leuchtdichten unter Vernachlässigung des nichtlinearen Zusammenhang zwischen Signal und generierter Leuchtdichte, der durch die Gamma-Kennlinie beschrieben ist, im Wesentlichen unverändert gegenüber dem unmodulierten Fall, wohingegen in der Differenz der Leuchtdichten der Pixel das übertragene Datenbit codiert enthalten ist.

Sofern die Datenfolge die Leuchtdichte der einzelnen Pixel moduliert, sei angemerkt, dass damit die Gesamtleuchtdichte eines Pixels gemeint ist. Ein Pixel besteht in den heute verbreiteten Displays üblicherweise aus drei Licht emittierenden Elementen, nachfolgend auch Leuchtelemente genannt, die in den Primärfarben Rot, Grün und Blau (RGB) leuchten. Jedes Leuchtelement hat grundsätzlich eine eigene einstellbare Leuchtdichte, wobei das Verhältnis der Leuchtdichten der Leuchtelemente zueinander eine bestimmte aus den Grundfarben RGB additiv zusammengesetzte Farbe definiert. Soweit hier von einer Modulation der Leuchtdichte bzw. des daraus resultierenden Sinneseindrucks "Helligkeit" die Rede ist, ist damit eine synchrone Modulation der Leuchtdichte aller Leuchtelemente eines Pixels gemeint, ohne das Leuchtdichteverhältnis der Leuchtelemente untereinander, d.h. die Farbe eines Pixels zu verändern.

Gleichwohl ist es auch möglich und fallspezifisch auch zweckdienlich, alternativ oder zusätzlich zur Modulation der Leuchtdichte die Farbe eines Pixels zu modulieren. Dies bedeutet, dass die übertragenen Daten durch Farbdifferenzen anstelle von Leuchtdichtedifferenzen codiert werden. Dies kann beispielsweise dadurch erfolgen, dass -wie zuvor- einem Datenbit "1" ein bestimmter Leuchtdichtedifferenzwert oder Modulationswert zugeordnet ist, der jedoch nicht global auf alle Leuchtelemente eines Pixels gleichermaßen, sondern nur auf ein oder zwei der RGB-Leuchtelemente angewendet wird. Dies führt dazu, dass die Farbe eines Bildpunktes geändert wird. Es ist dann erforderlich, für jede der drei Grundfarben der Pixel ein Datenteilsignal zu verwenden und folglich aus den Datenpaketen auch drei einzelne Datenfolgen zu definieren. Diese können als RGB-Datenfolgetripel zusammengefasst werden. Die Farbänderung zwischen zwei auf einander folgenden Bildern bleibt bei der Anwendung der farblich differenziellen Modulation im Mittel wieder unverändert.

Anstelle oder zusätzlich zu der beschriebenen zeitlich differenziellen Modulation, kann eine räumlich differenzielle Modulation erfolgen. Hierbei werden zur Übertragung eines Datenbits zwei Pixel innerhalb desselben Bildes verwendet, die insbesondere benachbart zueinander liegen. Diese beiden Pixel bilden somit ein Pixelpaar. Die Modulation kann nun dadurch erfolgen, dass die einzelnen Datenbits eines Datenpakets auf diejenigen Teilbildsignale aufmoduliert werden, die jeweils das erste Pixel eines Pixelpaares ansteuern. Die anderen Teilbildsignale, die jeweils das zweite Pixel eines Pixelpaares ansteuern, können jeweils invertiert moduliert werden. Die Leuchtdichtedifferenz oder Farbdifferenz der Pixel eines Pixelpaares zueinander liefert den Wert des zu übertragenden Bits. Sind die Pixel eines Pixelpaares unmittelbare Nachbarn, kann die Modulation dadurch erfolgen, dass die einzelnen Datenbits eines Datenpakets auf diejenigen Teilbildsignale aufmoduliert werden, die jeweils jedes zweite Pixel ansteuern, wohingegen die anderen Teilbildsignale, die jeweils ein jedes benachbartes erstes Pixel ansteuern, jeweils invertiert moduliert werden.

Durch die Verwendung der räumlichen differenziellen Modulation können in jedem Bild der Bildfolge andere Datenbits übertragen werden, d.h. bei einer Bildfrequenz von 200Hz auch 200 Datenbits pro Bildpunkt. Allerdings steht innerhalb eines Bildes nur die Hälfte der Bildpunkte für die Modulation, d.h. innerhalb eines Bildes nur die Hälfte der Pixel zur Verfügung, so dass die maximale Übertragungsrate identisch ist zur Übertragungsrate bei der zeitlich differenziellen Modulation. Bei geeigneten Betrachtungsparametern kann diese räumlich differenzielle Modulation von menschlichen Betrachtern nicht wahrgenommen werden, da das räumliche Auflösungsvermögen des menschlichen Gesichtssinns für hohe Ortsfrequenzen begrenzt ist.

Auch bei der räumlich differenziellen Modulation kann eine Modulation der Leuchtdichte der Pixel und/ oder deren Farbe vorgenommenen werden. Die dadurch bedingte Reduktion der Auflösung ist insbesondere für die Farbdifferenzen benachbarter Pixel akzeptabel, so dass eine farblich differenzielle Modulation die eventuelle Wahrnehmung von Störungen besonders effizient einschränkt.

Es sei angemerkt, dass es bei den beschriebenen Modulationsverfahren nicht zwingend erforderlich ist, jedes der Pixel des Bildschirms moduliert anzusteuern. So kann die Anzahl der Datenbits eines Datenpakets und folgemäßig die Anzahl der Datenteilsignale kleiner als die Anzahl der Pixel sein. In diesem Fall wird beispielsweise nur ein Teil der Pixel moduliert angesteuert. Der übrige Teil der Bildpunkte wird dagegen nicht moduliert angesteuert, d.h. für die optische Freiraumübertragung nicht genutzt. Auf diese Weise wird nur ein Ausschnitt des Bildschirms der bildgebenden Vorrichtung verwendet, nicht dagegen der gesamte Bildschirm. Beispielsweise kann ein rechteckiger Ausschnitt verwendet werden.

Alternativ zur Nichtnutzung von Pixeln zur Datenübertragung kann bei Verwendung einer kleineren Anzahl an Datenbits bzw. Datenteilsignalen als Pixel eine gemeinsame Modulation mehrerer benachbarter Bildpunkte vorgenommen werden. So ist es von Vorteil, wenn eine Vielzahl an Gruppen, insbesondere Blöcken, aus jeweils mehreren Pixeln gebildet ist, und die Anzahl der Datenbits bzw. Datenteilsignale der Anzahl der gebildeten Gruppen entspricht. Es wird dann jede Gruppe individuell moduliert, aber jedes Pixel innerhalb einer Gruppe identisch moduliert angesteuert.

Unter ‚Blöcken' sind in diesem Zusammenhang zusammenhängende Bereiche des Bildschirms, d.h. eine rechteckige, insbesondere quadratische Gruppe von Bildelementen zu verstehen, beispielsweise 2x2, 2x3, 3x3, 4x4 usw. Pixel. Die Bildung von Gruppen und gemeinsame Modulation der Lichtemission der Pixel einer Gruppe hat den Vorteil, dass die räumliche Auflösung der codierten Daten reduziert wird, so dass geringere Anforderungen an die Auflösung der Kamera des Empfängers und die Ausrichtung seiner optischen Erfassung des Bildschirms gestellt werden können.

Anstelle einer einfachen Wiederholung von Informationen innerhalb eines Blocks kann auch eine Tiefpassfilterung eingesetzt werden, um die Bilder eines Bildpaares mit begrenzter räumlicher Auflösung zu generieren. Eine Tiefpassfilterung bewirkt hierbei, dass z.B. nur eines von vier Pixeln aus einer Gruppe von 2x2 Pixeln die volle Modulationsamplitude aufweist, während die Modulationsamplituden der anderen Pixel über eine Interpolation bestimmt werden. Dieses kann z.B. eine lineare Interpolation sein.

Die Übertragung der Daten ist naturgemäß Störeinflüssen unterworfen. So ist es beispielsweise problematisch, wenn der Lichtemission der Pixel Licht einer flackernden Leuchtstoffröhre überlagert ist. Es ist daher von Vorteil, die Fehlerrate der Übertragung zu reduzieren. Dies kann beispielsweise durch ein Verfahren der Vorwärtsfehlerkorretur (Forward Error Correction), mittels LDPC-Codes (Low-Density-Parity-Check-Codes), Paritätsbits oder eine zyklische Redundanzprüfung (CRC) erfolgen. Diese Verfahren sind im Stand der Technik grundsätzlich bekannt.

Damit die Kamera die durch die aufgenommenen Lichtemissionen der Pixel empfangenen Bildinformationen korrekt auswertet, d.h. korrekt decodiert und in die ursprünglichen Daten zurückwandelt, muss eine Synchronisation zwischen der Kamera und der bildgebenden Vorrichtung erfolgen. Eine solche Synchronisation kann dadurch unterstützt werden, dass in die Modulation der Pixel Referenzmarken eingebracht werden. Solche Referenzmarken können von einem einzigen, von mehreren, einer Vielzahl oder sogar von allen Pixeln oder Pixelgruppen übertragen werden.

In räumlicher Hinsicht können dabei bestimmte Pixel verwendet werden, die eine bestimmte ausgezeichnete Lage innerhalb des Bildschirms besitzen, oder aber beliebige, insbesondere willkürlich gewählte Bildpunkte.

In zeitlicher Hinsicht können die Referenzmarken in Bezug zu einer globalen Zeit zu festen Zeitpunkten, insbesondere regelmäßig in der Art eines Takts angezeigt werden. Alternativ können die Referenzmarken relativ bezogen auf die Datenübertragung gesetzt werden, beispielsweise als Marker, die einen Anfang und ein Ende eines übertragenen Datenpakets markieren. Entsprechende Verfahren sind aus der digitalen Übertragungstechnik über gewöhnliche Übertragungskanäle grundsätzlich bekannt.

Die Verwendung von Referenzmarken kann auch dazu dienen, eine Ausrichtung der aufgenommenen Bilder im Erfassungsbereich des Empfängers bzw. der Kamera zu erleichtern. Hierzu ist es erforderlich, dass die Marker an einer oder mehreren bestimmten Stellen erscheinen, d.h. von bestimmten Pixeln angezeigt werden, die die Kamera kennt und erwartet. Diese Marker sollen wiederum so moduliert werden, dass sie für den Betrachter unsichtbar sind.

Eine Referenzmarke kann beispielsweise durch ein räumliches Muster gebildet sein, das auf einem Teilbereich des Bildschirms oder auf dem gesamten Bildschirm dargestellt wird. Das Anzeigen von Referenzmarken kann dann dadurch erfolgen, dass den Teilbildsignalen der dazu bestimmten oder aller Pixel zusätzlich oder alternativ zu den Datenteilsignalen ein bestimmter Wert addiert oder subtrahiert wird. Insbesondere kann ein solches Muster erreicht werden, indem einigen der Teilbildsignale ein bestimmter Wert addiert und anderen Teilbildsignalen desselben Bildes, d.h. räumlich, oder des nachfolgenden Bildes, d.h. zeitlich, ein bestimmter Wert, insbesondere gleichen Betrages subtrahiert wird.

Für den räumlichen Fall kann beispielsweise entlang einer Pixelreihe oder Pixelspalte abwechselnd ein Pixel mit einem um einen Wert erhöhten Teilbildsignal und das benachbarte Pixel mit einem betraglich um den Wert reduzierten Teilbildsignal angesteuert werden, so dass sich, verdeckt in der Bildfolge, ein Streifenmuster ergibt. Dieses kann als Zeitmarke verwendet werden, die die Kamera befähigt, sich mit der bildgebenden Vorrichtung zu synchronisieren. Natürlich ist es auch möglich, dass das Muster differenziell in der Bildfolge codiert wird, d.h. sich aus der Differenz zweier aufeinanderfolgender Bilder eines Bildpaares oder aus der Differenz benachbarter Pixel desselben Bildes ergibt.

Der Empfänger kann eine beabstandet zur bildgebenden Vorrichtung anzuordnende videoaufnahmefähige Kamera (Bewegtbildkamera), insbesondere eine hochauflösende Kamera sein, die zumindest für den Zeitraum der Datenübertragung die Pixel aufnimmt und aus den Lichtemissionen der Pixel die Datenteilsignale bzw. Datenpakete decodiert und in die ursprünglichen Daten zurückwandelt. Die Kamera kann eine handelsübliche CMOS-Kamera sein, wie sie heutzutage in Smartphones und Tablets integriert ist. Sie ist leistungsfähig und besitzt in der Regel hohe Auflösungen durch optische Sensoren mit derzeit 5-10 Megapixeln. Gleichzeitig sind in die Smartphones und Tablets leistungsfähige Prozessoren eingebaut, die komplexe Applikationen und Signalverarbeitungsschritte für die Analyse der aufgenommenen Bilddaten ermöglichen. Der Empfänger weist einen Prozessor auf, auf dem Software zur Demodulation und Decodierung der Datenteilsignale implementiert ist, um die Datenpakete zu rekonstruieren.

Die Auswertung der Bilddaten im Empfänger kann dadurch erfolgen, dass sich die Kamera durch geeignete Maßnahmen wie beispielsweise die Verwendung von Referenzmarken, zunächst auf die Sendesequenz synchronisiert, und anschließend die Dekodierung der in den Lichtemissionen, d.h. den erfassten Leuchtdichte- oder Farbwerten der einzelnen Bildpunkte codierten Daten erfolgt.

Dies kann im Falle zeitlich differenziell codierter Daten durch Auswertung aufeinanderfolgender Bilder erfolgen. Im oben genannten Beispiel der zeitlich differenziellen Codierung müssen lediglich die Differenzen zwischen zwei aufeinander folgenden, ein Bildpaar bildenden Bildern gebildet werden, wobei als Differenz hier die Differenzen der Leuchtdichten oder der Farbe eines jeden Pixels zu zwei verschiedenen Zeitpunkten gemeint ist. Natürlich wird hierzu eine geeignete Abbildung der von den einzelnen Pixeln erzeugten Bildpunkte der Bilder auf die Kamera vorausgesetzt. Hierzu bietet z.B. das Display des Smartphones, das das Kamerabild zeigt, für den Nutzer eine Orientierungshilfe. Durch Interpolationsfilter und eingebettete Synchronisationsinformation kann eine automatische Optimierung durch eine Datenübertragungs-Applikation erreicht werden.

Es sei noch darauf hingewiesen, dass für eine korrekte Demodulation die Aufnahmebildfrequenz der Kamera der Bildwiedergabefrequenz des Bildschirms angepasst sein muss. Wird also beispielsweise ein 100 Hz-Bildschirm verwendet, so muss auch die Kamera 100 Bilder pro Sekunde aufzeichnen. Herkömmliche Bewegtbildkameras sind oftmals auf die übliche Bildaufnahmefrequenz von 50 Bildern pro Sekunde ausgelegt. Gleichwohl sind sie jedoch technisch in der Anlage, höhere Bildaufnahmefrequenzen zu erreichen. Eine Anpassung auf die doppelte oder, im Fall einer 200 Hz Bildwiedergabefrequenz des Bildschirms, vierfache Aufnahmefrequenz ist mit einer CMOS-Kamera kein Problem.

Die Vorteile der Erfindung bestehen demnach darin, dass unter Verwendung vorhandener Komponenten eine komfortable, leistungsfähige Datenübertragung möglich ist, die insbesondere für neuartige Multimediadienste nutzbar gemacht werden kann. Die oben genannte Datenrate von 200 Mbit/s ist bereits beim heutigen Stand der Technik realistisch. Über einen handelsüblichen Flachbildfernseher könnte damit in nur 15 Sekunden der Inhalt einer kompletten CD geladen werden. Für einen Internetzugang im Heimbereich wäre eine weitaus geringere Datenrate ausreichend, da z.B. der dort vorhandene DSL Anschluss ohnehin einen Flaschenhals darstellt. Das erfindungsgemäße Verfahren kann daher zusätzlich oder sogar alternativ zur Übertragung von Daten per WLAN verwendet werden.

Der Nutzen der Erfindung liegt allerdings nicht alleine im reinen Ersatz bestehender WLAN-Netze, die in vielen Fällen bereits heute eine attraktive Vernetzungslösung bieten. Vielmehr sind wegen der prinzipiellen Vorteile der optischen Freiraumausbreitung auf der einen Seite und der Integration in moderne Endgeräte auf der anderen Seite völlig neuartige, komfortable Dienste denkbar. Der Vielzahl von Optionen stehen als begrenzende Faktoren lediglich die Notwendigkeit einer Sichtverbindung und einer zumindest groben Ausrichtung des Empfangsgeräts gegenüber. Letzteres bringt wiederum den Vorteil einer kontrollierbaren und für den Nutzer erkennbaren Abhörsicherheit.

Die Erfindung bietet eine kostengünstige, hoch effiziente und elegante Lösung für die Freiraumdatenübertragung über kurze Strecken. Unter Nutzung weit verbreiteter Geräte, beispielsweise eines Flachbildschirms als Sender und eines Smartphones/ Tablets mit entsprechender Kamera als Empfänger, können hohe Datenraten von über 100Mbit/s über mehrere Meter Entfernung parallel zur Wiedergabe von Videos übertragen werden, indem ein millionenfacher Parallelbetrieb von Freiraumübertragungsstrecken genutzt wird, ohne dass die Bilddarstellung visuell beeinträchtigt wird.

Weitere Vorteile und Merkmale der Erfindung werden nachfolgend anhand von Ausführungsbeispielen und der beigefügten Figuren näher erläutert. Es zeigen:

Figur 1: Anordnung aus Sender und Empfänger zur Freiraumdatenübertragung
Figur 2: schematische Darstellung einer Bildfolge
Figur 3: bildgebende Vorrichtung nach dem Stand der Technik
Figur 4: Aufteilung der zu übertragenden Daten in Datenpakete
Figur 4a: Bildung einer Datenfolge aus pixelbezogenen Datenpaketen
Figur 4b: Bildung einer aufbereiteten Datenfolge mit pixelbezogenen Modulationswerten
Figur 5: erweiterte bildgebende Vorrichtung gemäß der Erfindung
Figur 6: Bildschirmausschnitte mit Leuchtdichtewerten bei zeitlich differenzieller Modulation
Figur 7: Bildschirmausschnitte mit Leuchtdichtewerten bei räumlich differenzieller Modulation
Figur 8: Bildschirmausschnitte mit Leuchtdichtewerten bei farblich differenzieller Modulation
Figur 9: Blockschaltbild des Empfängers
Figur 10: Detaildarstellung des Demodulators

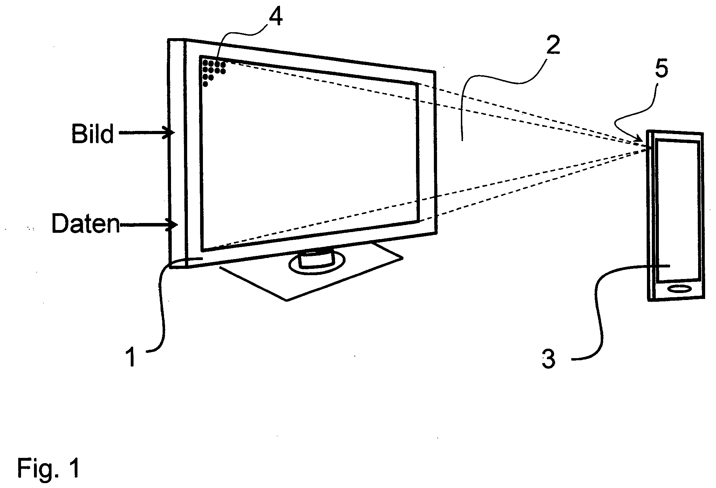

Figur 1 zeigt eine Anordnung zur optischen Übertragung von Daten im freien Raum von einem Sender 1 zu einem Empfänger 3. Der Sender 1 ist eine bildgebende Vorrichtung mit einer Vielzahl an Bildpunkten, hier in Gestalt eines Fernsehers mit Flachbildschirm. Der Empfänger 3 ist ein mobiles Endgerät zur Telekommunikation wie beispielsweise ein Smartphone mit integrierter Kamera zur Aufnahme der übertragenen Daten. Bei den vom Sender 1 zum Empfänger 3 zu übertragenden Daten handelt es sich um vom Bildsignal, das auf dem Fernseher 1 visualisiert wird und üblicherweise Bewegtbilder enthält, verschiedenen Daten. Der Fernseher 1 erhält somit neben dem üblichen Bildsignal zusätzliche Daten.

Bei den zu übertragenden Daten kann es sich um Nutzdaten oder Steuerdaten handeln. So können beispielsweise Fotos oder Musikstücke während des Fernsehens aus dem Internet oder einem lokalen Netzwerk geladen und über die erfindungsgemäße Freiraumübertragung vom Fernseher 1 zum Endgerät 3 übertragen werden. Auch können Steuerdaten beispielsweise von einem Bus der Gebäudeautomation vom Fernseher zum Endgerät übertragen werden und auf diese Weise beliebige Geräte wie Licht, Heizung, Jalousien, Beamer, etc. gesteuert werden.

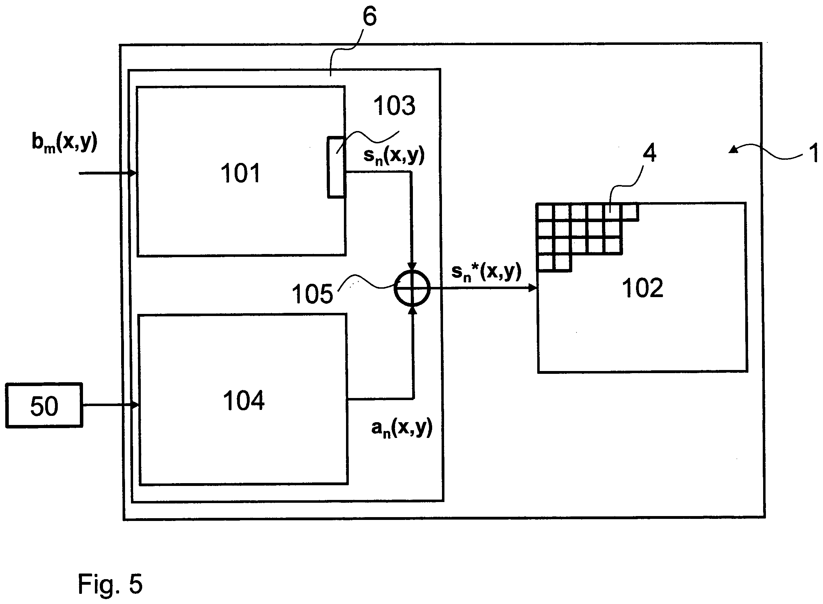

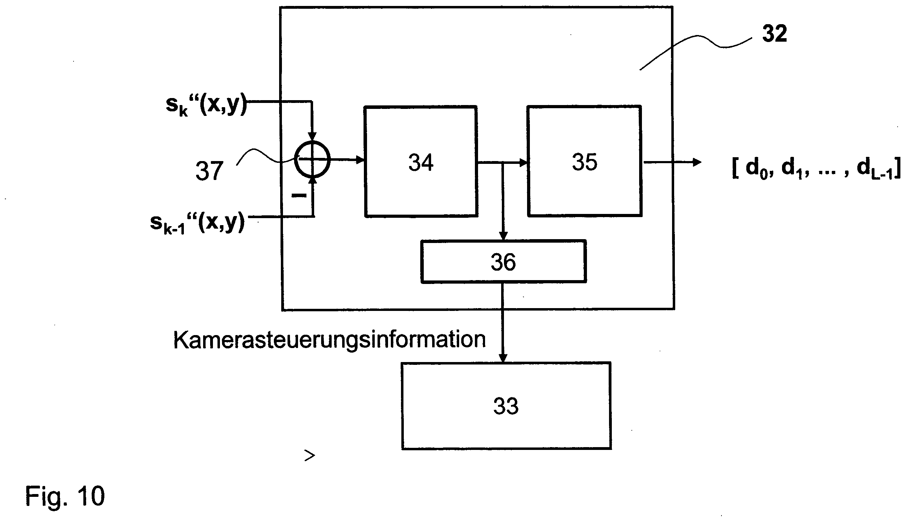

Ein Signalprozessor 6 (vgl. Figur 5) im Fernseher 1 moduliert die Daten auf das Fernsehbild unsichtbar für einen Betrachter. Die Kamera 5 im Smartphone 1 nimmt das modulierte Fernsehbild auf. Ein Prozessor 32 (vgl. Figur 10) mit implementiertem Demodulator und Decoder führt eine Demodulation und Decodierung zur Gewinnung der Daten aus dem Fernsehbild aus und liefert die Daten für die Applikation auf dem Endgerät 3. Der Nutzer muss die Kamera 5 hierfür lediglich grob ausrichten. Der Empfänger 3 muss aber kein mobiles Endgerät sein. Er kann auch stationär im Raum angeordnet sein.

Zur Veranschaulichung des erfindungsgemäßen Verfahrens wird als Ausgangspunkt zunächst der Fall der Darstellung bewegter Bilder auf der bildgebenden Vorrichtung 1 ohne die zusätzliche Übertragung von Daten im freien Raum veranschaulicht.

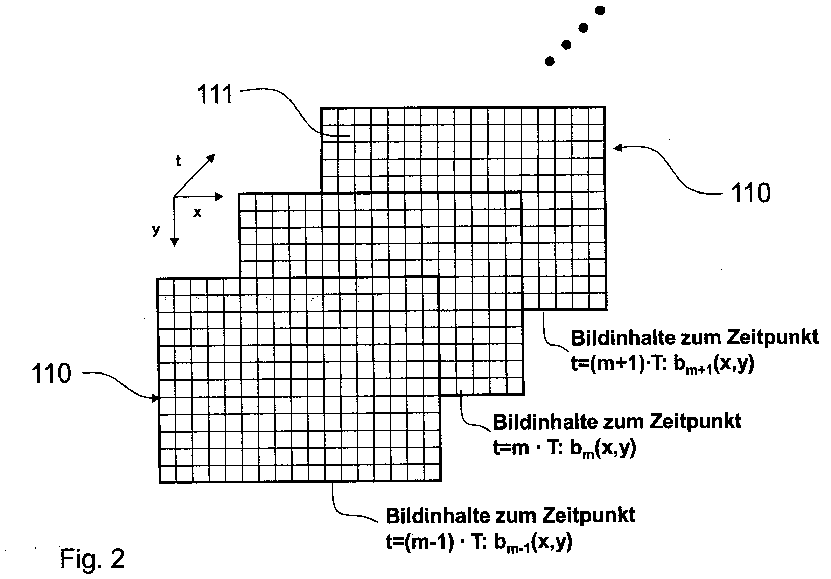

Eine Bildfolge $b_m(x,y)$ besteht üblicherweise aus einer zeitlichen Abfolge m = 0 ... i, i+1, ... M von Bildern 110, wie sie in Figur 2 dargestellt ist. Dabei wird ein jedes Bild 110 durch entsprechende Bilddaten $b_i(x,y)$ repräsentiert, die eine Vielzahl von Leuchtdichtewerten definieren. Jedes Bild 110 besteht aus einer Vielzahl maxtrixförmig angeordneter Bildpunkte 111, die durch die Koordinaten x, y referenziert sind. Bei einem Bild in Full HD (High Definition) sind beispielsweise 1920 x 1080 Bildpunkte 111 vorhanden. Somit ergibt sich in horizontaler Richtung ein Laufindex x von 1 bis 1920 (oder 0 bis 1919) und in vertikaler Richtung: ein Laufindex y von 1 bis 1080 (oder 0 bis 1079). Jedem Bild 110 der Bildfolge $b_m(x,y)$ ist ein Indexwert m zugeordnet, der das m-te Bild der Bildfolge angibt.

Die Bilder 110 liegen zu diskreten Zeitpunkten mit einer Bildfrequenz $f_B$ = 1/T vor und stehen somit in einem zeitlichen Rahmen zueinander, so dass einem Bild 110 mit dem Index m der Zeitpunkt $t_0$ = m·T, dem nächstfolgenden Bild 110 mit dem Index m +1 der Zeitpunkt $t_1$ = (m+1)·T und dem vorherigen Bild 110 mit dem Index m -1 der Zeitpunkt $t_{-1}$ = (m-1)·T usw. zugeordnet ist. Entsprechend ergeben sich für das vordere Bild 110 in Figur 2 die Bildinhalte $b_{m-1}(x, y)$, für das mittlere Bild in Figur 1 die Bildinhalte $b_m(x,y)$ und für das hintere Bild 110 in Figur 2 die Bildinhalte $b_{m+1}(x, y)$. Ist die Bildfrequenz(x,y)beispielsweise 50 Hz, so beträgt der zeitliche Abstand T zwischen zwei Bildern 20ms.

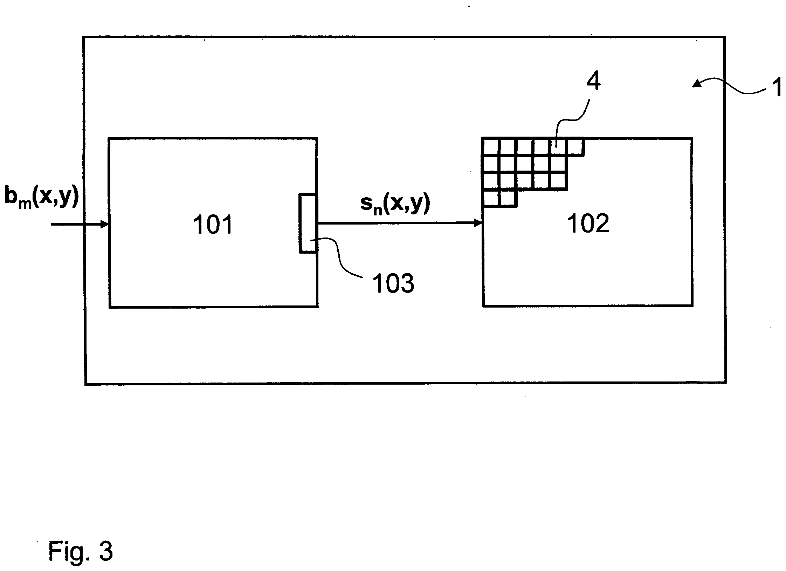

Die Bildfolge $b_m(x,y)$ besteht zunächst aus Rohbilddaten, die zur Darstellung auf einer bildgebenden Vorrichtung 1 in der Regel aufbereitet werden müssen. Figur 3 zeigt die bildgebende Vorrichtung 1 nach Figur 1 in Blockdarstellung mit einem Bildspeicher 101, der auch eine Signalverarbeitung umfasst, und einem Bildschirm 102, auf dem die Rohbildfolge $b_m(x,y)$ dargestellt werden soll. Der Bildschirm 102 kann beispielsweise ein Flachbildschirm sein, insbesondere ein TFT, LCD, Plasma, LED oder OLED Bildschirm. Er verfügt über eine Vielzahl matrixförmig angeordneter, einzeln ansteuerbarer Pixel 4. Bei einem Bildschirm in Full HD (High Definition) sind beispielsweise 1920x1080 Pixel vorhanden, die jeweils aus drei Leuchtelementen für die Farben Rot, Grün und Blau bestehen.

Wenngleich in diesem Beispiel für die Rohbildfolge $b_m(x,y)$ und den Bildschirm 102 dieselbe Auflösung genannt ist, so ist es jedoch nicht immer der Fall, dass die Bilder 110 der Rohbildfolge $b_m(x,y)$ dieselbe Anzahl an Bildpunkten 111 besitzen, wie der Bildschirm 102 an Pixeln 4 aufweist. Ist dies allerdings der Fall, bilden die Bildpunktkoordinaten x, y der Bildfolge $b_m(x,y)$ gleichzeitig Pixelkoordinaten des Bildschirms. Da dies jedoch im Allgemeinen nicht der Fall ist, ist insoweit ein Hoch- oder Herunterskalieren der Auflösung, ggf. auch ein Abschneiden von Bildpunkten 111 der Bilder 110 der Rohbildfolge $b_m(x,y)$ erforderlich, um die Bilder110 an die Bildschirmauflösung anzupassen und geeignet auf dem Bildschirm 102 anzeigen zu können.

Wie Figur 3 weiter zeigt, wird die Rohbildfolge $b_m(x,y)$ zunächst dem digitalen Bildspeicher und Signalverarbeitung 101 zugeführt. Die Signalverarbeitung übernimmt die Aufbereitung der Rohbildfolge $b_m(x,y)$ zum Erhalt einer aufbereiteten Bildfolge $s_n(x,y)$, die für die Darstellung auf dem Bildschirm 102 geeignet ist. Die Aufbereitung kann insbesondere die Skalierung auf die Bildschirmgröße bzw. Bildschirmauflösung, eine Leuchtdichteanpassung und/ oder die Anpassung der Bildfrequenz $f_B$ umfassen.

Die Leuchtdichteanpassung kann durch die Zuordnung eines Leuchtdichtewerts für jeden Bildpunkt 111 jedes Bildes 110 erfolgen, z.B. ein 8-Bit Leuchtdichtewert zwischen 0 und 255. So definiert nach der Aufbereitung der Rohbildfolge $b_m(x,y)$ die aufbereitete, zu visualisierende Bildfolge $s_n(x,y)$ die Leuchtdichtewerte für alle Bildschirmpixel 4 an den Stellen x, y.

Die einzelnen Bilder 110 der aufbereiteten Bildfolge $s_n(x,y)$ können beispielsweise einen Zeitabstand von T = 10ms haben, um eine Wiedergabefrequenz $f_W$ von 100Hz zu erhalten, mit der der Fernseher 1 die aufbereitete Bildfolge $s_n(x,y)$ wiedergibt. Sofern die Bildfrequenz $f_B$ bei der Hälfte der Wiedergabefrequenz $f_W$ liegt, können die Bilder 110 aus dem Bildspeicher 101 einfach doppelt so schnell ausgelesen werden und jeweils zweimal dasselbe Bild 110 hintereinander wiedergegeben werden. In diesem Fall würde also der Index n der aufbereiteten Bildfolge $s_n(x,y)$ doppelt so schnell voranschreiten wie der Index m der Rohbildfolge $b_m(x,y)$, so dass mit n = 0 ... i, i+1, ... 2M ist.

Die Art der Aufbereitung zum Erhalt der aufbereiteten Bildfolge, insbesondere die Zuordnung der entsprechenden Leuchtdichtewerte, ist abhängig vom verwendeten Bildschirm 102. Die aufbereitete Bildfolge $s_n(x,y)$ wird aus dem digitalen Bildspeicher 101 über eine Schnittstelle 103 an den Bildschirm 102 geliefert, der sie anschließend darstellt.

Die zeitliche Abfolge von Leuchtdichtewerten für ein bestimmtes Pixel 4 wird als Teilbildsignal $s_{x,y}(n)$ verstanden. Die Bilddaten $s_i(x, y)$ für ein i-tes Bild 110 stellen somit eine Vielzahl von Teilbildsignalen $s_{x,y}(n)$ zu einem bestimmten Zeitpunkt $t_i=i \cdot T$ dar. Die Bilddaten $s_i(x, y)$ selbst definieren die Bilder folglich örtlich und sind nicht zeitabhängig. Die Teilbildsignale $s_{x,y}(n)$ und die Bildfolge $s_n(x, y)$ sind dagegen zeitabhängig. Dabei bezieht sich ein Teilbildsignal $s_{x,y}(n)$ auf den zeitlichen Leuchtdichteverlauf eines einzelnen Pixels 4 an der Stelle x, y, wohingegen sich die Bildfolge $s_n(x, y)$ als zeitliche Folge von Bilder repräsentierenden Bilddaten $s_i(x, y)$ auf die Gesamtheit aller Pixel 4 bezieht, also alle Teilbildsignale $s_{x,y}(n)$ umfasst. Ein Teilbildsignal $s_{x,y}(n)$ repräsentiert also das unmodulierte Ansteuersignal für den Pixel 4 an der Stelle x, y.

Erfindungsgemäß werden nun zusätzliche Daten 50 den Bildern 110 der aufbereiteten Bildfolge $s_n(x,y)$ überlagert. Dies erfolgt vorteilhafterweise derart, dass die zusätzlichen Daten 50 für einen Betrachter des Bildschirms 102 nicht wahrnehmbar sind und die Wahrnehmung der Bilder 110 der aufbereiteten Bildfolge $s_n(x,y)$ unbeeinträchtigt ist.

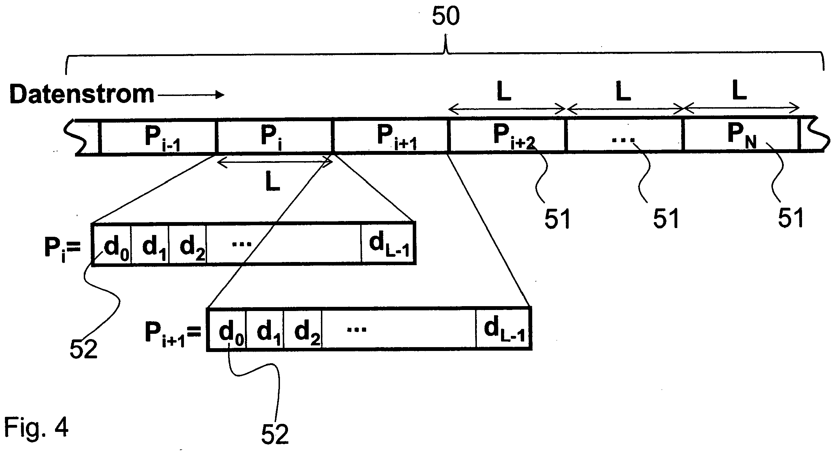

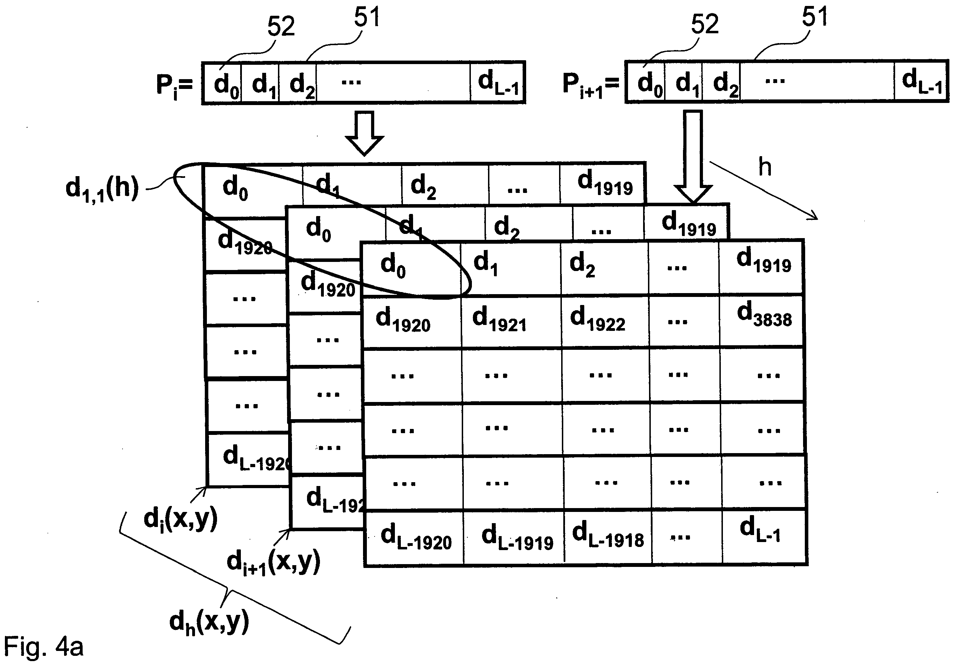

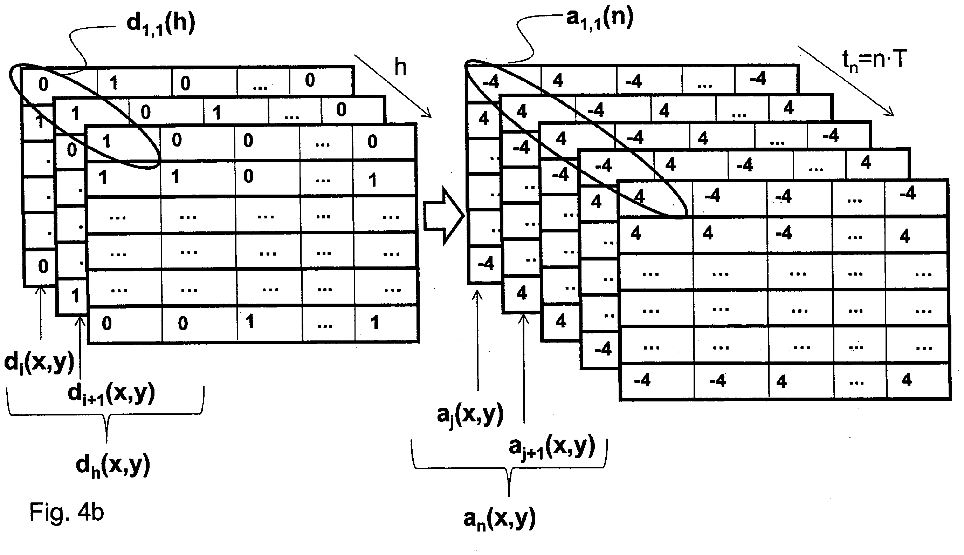

Die zu übertragenden Daten 50 können Nutzdaten oder Steuerdaten sein. Es kann sich dabei um eine Datei oder einen kontinuierlichen Datenstrom handeln. Figur 4 veranschaulicht, dass die zu übertragenden Daten 50 in einer zeitlichen Reihenfolge geordnet vorliegen und zunächst in eine Anzahl N Datenpakete 51 der Länge L aufgeteilt werden. Jedes Paket 51 umfasst eine der Länge L entsprechende Anzahl an Datenbits 52, $d_0$, $d_1$, $d_2$, ... $d_{L-1}$, die vorzugsweise der Anzahl der Pixel 4 der bildgebenden Vorrichtung 1 entspricht. Somit erhält jedes Paket 51 dieselbe Anzahl L Bits 52, wie die bildgebende Vorrichtung 1 Pixel 4 aufweist. Dies hat den Vorteil, dass von allen Pixeln 4 Datenbits 52 eines Pakets 51 übertragen werden können und eine maximale Datenrate erreicht wird. Besitzt auch jedes Bild 110 der aufbereiteten Bildfolge $s_n(x,y)$ eine Anzahl x·y an Bildpunkten 111, die der Anzahl der Pixel 4 der bildgebenden Vorrichtung 1 entspricht, kann dem Leuchtdichtewert jedes Bildpunktes 111 genau ein Bit 52 eines Paketes 51 der zu übertragenden Daten 50 aufmoduliert werden.

Bei der erfindungsgemäßen Modulation ändert ein Datenbit 52 den Leuchtdichtewert eines bestimmten Pixels 4 um einen bestimmten Betrag. Die zeitliche Abfolge der Beträge der Leuchtdichteänderungen, die die Leuchtdichte jeweils desselben Pixels 4 an der Stelle x, y ändern, stellt ein aufbereitetes Datenteilsignal $a_{x,y}(n)$ dar, siehe Figur 4b. Ein solches Datenteilsignal $a_{x,y}(n)$ repräsentiert das Modulationssignal, um das das unmodulierte Ansteuersignal für den Pixel 4 an der Stelle x, y zum Zeitpunkt $t_n= n \cdot T$ moduliert wird. Es wird aus einem unaufbereiteten Datenteilsignal $d_{x,y}(h)$ gebildet, welches lediglich die aufzumodulierende Bitfolge für das Pixel 4 an der Stelle x, y darstellt. Ein Datenpaket 51 stellt somit eine Vielzahl von unaufbereiteten Datenteilsignalen $d_{x,y}(h)$ zu einem bestimmten diskreten Zeitpunkt h dar und definiert örtlich, um welchen Bitwert die Leuchtdichte der einzelnen Pixel 4 jeweils geändert werden soll. Es ist nicht zeitabhängig. Das unaufbereitete Datenteilsignal $d_{x,y}(h)$ und das aufbereitete Datenteilsignal $a_{x,y}(n)$, sowie eine aus den Datenpaketen 51 gebildete, unaufbereitete Datenfolge $d_h(x,y)$ und aufbereitete Datenfolge $a_n(x,y)$ sind dagegen zeitabhängig, siehe hierzu Figur 4b.

Gemäß einer ersten Ausführungsvariante des erfindungsgemäßen Verfahrens wird für die Integration der zu übertragenden Daten 50 in die zu visualisierende Bildfolge $s_n(x,y)$ eine zeitlich differenzielle Modulation der Leuchtdichte der einzelnen Pixel 4 vorgenommen. Eine Alternative hierzu besteht in einer räumlich differenziellen Modulation. Bei beiden Modulationsarten kann eine reine Leuchtdichtemodulation oder eine Modulation der Farbe erfolgen. Dabei sei angemerkt, dass auch die Farbmodulation eine Modulation der Leuchtdichte umfasst, jedoch werden hier die Leuchtdichten der einzelnen RGB-Leuchtelemente der Pixel 4 unterschiedlich moduliert, wohingegen bei der reinen Leuchtdichtemodulation alle RGB-Leuchtelemente eines Pixels identisch moduliert werden.

Vorzugsweise werden alle Pixel des Bildschirms 102 einzeln moduliert, um eine maximale Übertragungsrate zu erhalten. Unter Verwendung des bereits genannten Beispiels eines Full HD Bildschirms 102 mit 1920 x 1080 Pixeln und 100 Hz Bildfrequenz bedeutet dies, dass auch die Länge L der Pakete 51 1920 x 1080 = 2.073.600 Bits 52 umfassen kann. Es besteht aber auch die Möglichkeit, Pixel zusammenzufassen, beispielsweise Gruppen von 2x2 oder 3x3, etc. ein Rechteck bildende Pixel identisch zu modulieren. Dies hat den Vorteil, dass geringere Anforderungen an die Qualität der Kamera 5 im Empfänger 3 gestellt werden können. Hierdurch reduziert sich entsprechend die Anzahl der Bits 51 in einem Paket 52.

Eine zeitlich differenzielle Modulation erfolgt dadurch, dass zwei aufeinander folgende Bilder $s_i(x, y)$ und $s_{i+1}(x, y)$ der aufbereiteten Bildfolge $s_n(x,y)$ als ein Bildpaar 112 verwendet werden und die Bits 52 eines der Pakete 51 jeweils durch eine aus zwei Amplitudenwerten bestehende Sequenz in die beiden Bilder integriert werden, so dass die Differenz der Bilder $s_i(x, y)$ und $s_{i+1}(x, y)$ dieses Bildpaares 112 in jedem Pixel 4 den Wert eines bestimmten Bits 52 angibt, das diesem entsprechenden Pixel 4 zuvor zugeordnet wurde.

Ein Bildpaar 112 benötigt bei 100Hz Bildfrequenz einen Zeitraum von 20ms. Werden alle Pixel 4 des Bildschirms 102 zur Datenübertragung verwendet, können pro Bildpaar 1920 x 1080 = 2.073.600 Bits übertragen werden. Die Datenrate beträgt dann 103,68 Mbit/s. Es sei angemerkt, dass die Nutzung von Maßnahmen zur Synchronisation und/ oder zum Fehlerschutz die Anzahl für die Datenübertragung verfügbarer Pixel 4 reduzieren können, wodurch auch die maximale Übertragungsrate reduziert ist.

Figur 5 veranschaulicht, wie die zu übertragenden Daten 50 in die Bilder 110 der aufbereiteten Bildfolge $s_n(x,y)$ integriert werden, d.h. wie die Aufmodulation der zu übertragenden Daten 50 auf die aufbereitete Bildfolge $s_n(x,y)$ erfolgt. Dies erfolgt in einem Signalprozessor 6. Hierzu umfasst die bildgebende Vorrichtung 1 im Vergleich zu Figur 3 einen zusätzlichen Datenspeicher 104 mit einer Signalverarbeitung zur Zwischenspeicherung und Aufbereitung der zu übertragenden Daten 50 und einen Addierer 105 zu deren Aufmodulation auf die aufbereitete Bildfolge $s_n(x,y)$.

Die zu übertragenden Daten 50 können beispielsweise aus dem Internet, einem lokalen Netzwerk oder von einer Festplatte kommen und werden zunächst in dem Datenspeicher 104 zwischengespeichert.

Anschließend werden sie von der Signalverarbeitung, wie in Bezug zu Figur 4 erläutert, zunächst in Pakete 51 der Länge L eingeteilt, die jeweils aus Bits $[d_0, d_1, d_2 ... d_{L-1}]$ bestehen. Die Paketlänge L entspricht der Anzahl der Bits 51 in einem Paket 52. Sie entspricht maximal der Pixelanzahl der bildgebenden Vorrichtung 1, kann jedoch auch geringer sein, beispielswiese um ¼ oder 1/9 geringer, wenn Pixelgruppen einer Größe von 2x2 oder 3x3 Pixeln 4 gemeinsam angesteuert werden.

Anschließend werden die Paketbits 51 den anzusteuernden Pixeln 4 zugeordnet. Dies kann im einfachsten Fall der Reihe nach zeilenweise erfolgen wie in Figur 4a veranschaulicht ist. D.h., dass die einzelnen Bits 51 eines Pakets 52 der Reihe nach den einzelnen Pixeln 4 einer Zeile des Bildschirms 102 zugeordnet werden. Am Ende dieser Zeile wird dann auf die nächste Zeile gewechselt. Alternativ kann die Zuordnung auch reihenweise erfolgen. Man erhält dadurch ein pixelbezogenes Paket $d_i(x,y)$, Dies ist nachfolgend anhand der L=1920x1080 Bits 52 des i-ten Pakts 51 $P_i$ und in den Figuren 4a, 4b anhand von drei aufeinander folgenden pixelbezogenen Datenpaketen $d_i(x,y)$ veranschaulicht:

$$P_i = [d_0, d_1, d_2 ... d_{L-1}] \rightarrow$$

| | |
|---|---|
| $d_i(1,1) = d_0$, | (erstes Pixel 4 links oben) |
| $d_i(1,2) = d_1$, | |
| ... | |
| $d_i(1,1920) = d_{1919}$, | (Zeilenende) |
| $d_i(2,1) = d_{1920}$, | (nächster Zeilenanfang) |
| $d_i(2,2) = d_{1921}$, | |
| ... | |
| $d_i(1080,1919) = d_{L-2}$ | (letzte Zeile) |
| $d_i(1080,1920) = d_{L-1}$, | (letztes Pixel 4 rechts unten) |

Würden 2x2 Gruppen von Pixeln 4 identisch moduliert, wäre die Zuordnung bei L=960x540 Bits 52 wie folgt:

$$P_i = [d_0, d_1, d_2 ... d_{L-1}] \rightarrow$$

$d_i(1,1) = d_0,$        (erstes Pixel 4 links oben)

$d_i(1,2) = d_0$

$d_i(1,3) = d_1,$

...

$d_i(2,1) = d_0,$        (nächster Zeilenanfang)

$d_i(2,2) = d_0,$

$d_i(2,3) = d_1,$

...

$d_i(3,1) = d_{960},$

...

$d_i(1080,1919) = d_{L-1}$        (letzte Zeile)

$d_i(1080,1920) = d_{L-1},$        (letztes Pixel 4 rechts unten)

Betrachtet man die zeitliche Abfolge der Datenbits, die einem bestimmten Pixel an der Stelle x, y zugeordnet sind, ergibt sich die Datenteilfolge $d_{x,y}(n)$. Dies ist in Figur 4a für das erste Bit $d_0$ veranschaulicht, dem das erste Pixel mit den Koordinaten 1, 1 zugeordnet ist. Die Datenteilfolge ist hier entsprechend $d_{1,1}(n)$.

Jedes pixelbezogene Paket $d_i(x,y)$ wird anschließend einem Bildpaar 112 der aufbereiteten Bildfolge $s_n(x,y)$ zugeordnet, dessen beide Bilder 110 identische Bildinformationen enthalten, um die übertragenen Daten 50 später wieder ermitteln zu können. Die beiden Bilder 110 folgen idealerweise aufeinander. Es gilt dann $s_j(x, y) = s_{j+1}(x, y)$.

Sofern die Bildpaare 112 identischen Inhalts in der aufbereiteten Bildfolge $s_n(x,y)$ noch nicht vorhanden sind, können die Bildpaare dadurch erzeugt werden, dass nur ein Bild der aufbereiteten Bildfolge $s_n(x,y)$ verwendet und dieses zur Bildung eines Paares verdoppelt, d.h. wiederholt wird. Dies führt zwar zu einer halbierten Bildwiederholrate. Im Allgemeinen führt dies bei einer Bildfrequenz von 100 Hz oder mehr aber nur bei extremen Bildinhalten zu einer begrenzten Bildqualität, die immer noch wesentlich höher ist als z.B. bei Kinofilmen. Dort werden üblicherweise 24 bzw. 25 Bilder pro Sekunde verwendet, die mit mindestens verdoppelter Wiedergabefrequenz auf einem Bildschirm gezeigt werden.

Um eine Überlagerung der Bildinformation in differenzieller Weise zu erreichen, wird ein pixelbezogenes Paket $d_i(x,y)$ der Datenfolge $d_h(x,y)$ zu einem der beiden Bilder 110 des Bildpaares 112 pixelweise addiert und von dem anderen Bild 110 pixelweise subtrahiert, so dass die Bildinhalte im Mittel gegenüber den Einzelbildern unverändert bleiben.

Zusammengefasst wird bei der zeitlich differentiellen Modulation die Bildfolge $s_n(x,y)$ aus Bildpaaren 112 aufeinander folgender identischer Bilder 110 mit identischen Bilddaten $s_i(x,y)$ gebildet und die Datenfolge $d_h(x,y)$ aus pixelbezogenen Paketen $d_i(x,y)$ gebildet, von denen jedes zweite pixelbezogene Paket $d_{2i+1}(x,y)$ dem vorgehenden ersten pixelbezogene Paket $d_{2i}(x,y)$ mit umgekehrtem Vorzeichen entspricht, wobei jedes erste pixelbezogene Paket $d_{2i}(x,y)$ jedem ersten Bild eines Bildpaares 112 und jedes zweite pixelbezogene Paket $d_{2i+1}(x,y))$ jedem zweiten Bild des Bildpaares 112 überlagert wird.

Die Addition und Subtraktion kann auf zwei Arten erfolgen, wodurch eine unipolare oder eine bipolare Modulation realisierbar ist. Hierfür sei zum Verständnis erläutert, dass die einzelnen Werte eines Bildes 110 der aufbereiteten Bildfolge $s_n(x,y)$ an den Stellen x, y Leuchtdichtewerte für die Bildpunkte sind. Diese Leuchtdichtewerte können beispielsweise mit einer 8-Bit Signalamplitude beschrieben sein, d.h. im Wertebereich von 0 bis 255 liegen. Demgegenüber können die Bits 51 eines Datenpakets 52 logische Datenbits mit Werten von 0 und 1 sein.

Bei einem Datenbit von 1 würde dann beispielsweise dem Leuchtdichtewert eines Bildpunktes im ersten Bild eines Bildpaares eins addiert und dem Leuchtdichtewert desselben Bildpunktes im zweiten Bild des Bildpaares eins subtrahiert. Bei einem Datenbit von 0 würden dagegen die Leuchtdichtewerte keine Änderung erfahren. Hierdurch wird eine unipolare Modulation erreicht, da eine Leuchtdichteänderung nur im Falle eines Datenbits mit einer logischen eins erreicht wird. Da sich die Leuchtdichtewerte eines Bildpunktes in den Bildern des Bildpaares im Falle einer logischen null nicht unterscheiden, diese logische null aber ebenfalls Träger einer Information ist, welche beim Empfänger aber nur durch das Fehlen einer Modulation identifizierbar ist, besitzt die unipolare Modulation einen vergleichsweise geringen Störabstand.

Um den Störabstand um 3dB zu erhöhen, kann eine bipolare Modulation verwendet werden. Hierzu wird das durch den Abstand von null und eins gebildete Fenster um null zentriert. Dies erfolgt dadurch, dass allen Bitwerten eines pixelbezogenen Pakets $d_i(x,y)$ die halbe Amplitude abgezogen wird. Bei Bitwerten von null und eins ist die Amplitude 1, so dass dann der Wert 0,5 von allen Bitwerten subtrahiert wird.

Um darüber hinaus die Modulationshöhe vorgeben zu können, wird vorgeschlagen, die den Leuchtdichtewerten aufzuaddierenden bzw. zu subtrahierenden Datenbitwerte vorher mit einem Modulationsfaktor c zu multiplizieren. Der Modulationsfaktor c kann beispielsweise zwischen 3 und 8 liegen.

Nach der oben beschriebenen Zuordnung der Bits 52 eines Pakets 51 zu den Pixeln 4 erfolgt folglich eine weitere Verarbeitung der pixelbezogenen Pakete $d_i(x,y)$, bevor sie in die Bilder der aufbereiteten Bildfolge $s_n(x, y)$ integriert werden, nämlich eine Korrektur um die halbe Datenbitamplitude (-0,5), eine Multiplikation des korrigierten pixelbezogenen Pakets $d_i(x,y)$ mit dem Modulationsfaktor c sowie die Verdopplung jedes pixelbezogenen Pakets $d_i(x,y)$ und die Negierung des jeweiligen Doppels. Im Ergebnis wird bei einer Anzahl von N Paketen 51 eine aufbereitete Datenfolge $a_n(x,y)$ mit n = 1 ... j,j+1, ... 2N aufbereiteten, pixelbezogenen Datenpaketen erhalten, die mit der aufbereiteten Bildfolge $s_n(x,y)$ addiert werden kann. Dies ist nachfolgend mathematisch sowie in Figur 4b grafisch für c = 8 und konkrete Bitwerte veranschaulicht:

$$a_j(x,y) = c(d_i(x,y) - 0,5)$$

$$a_{j+1}(x,y) = -c(d_i(x,y) - 0,5)$$

Aus der unaufbereiteten Datenfolge $d_n(x,y)$ aus pixelbezogenen Datenpaketen $d_i(x,y)$ wird dadurch die aufbereitete Datenfolge $a_n(x,y)$, deren Laufindex n, demjenigen der aufbereiteten Bildfolge $s_n(x,y)$ entspricht und die die tatsächlichen Modulationswerte für die einzelnen Pixel 4 enthält. Rein beispielhaft ist eine aufbereitetet Datenteilfolge $a_x$, y(n) für das erste Pixel mit den Koordinaten 1,1 in Figur 4b angegeben, deren Modulationswerte $a_{1,1}(n)$ = [-4, 4, 4, -4, 4 ...] sind.

Die Integration der zu übertragenden Daten 50 in Gestalt der aufbereiteten Datenfolge $a_n(x,y)$ in die aufbereitete Bildfolge $s_n(x,y)$ erfolgt, wie Figur 5 zu entnehmen ist, mittels eines Addierers 105, der jedem Bild 110 der aufbereiteten Bildfolge $s_n(x,y)$ ein aufbereitetes pixelbezogenes Datenpaket $a_i(x,y)$ der aufbereiteten Datenfolge $a_n(x,y)$ addiert.

Die resultierende, modulierte Bildfolge $s_n^*(x,y)$ besteht dann aus einer Folge von Bildpaaren 112, wobei die Differenz der beiden Bilder 110 eines Bildpaares 112 für jedes einzelne Pixel 4 gerade den Wert des dem entsprechenden Pixel 4 zugeordneten Bits 52 eines Pakets 51 ergibt.

Für die Bildpunkte an den Koordinaten x=1, y=1 des n-ten und n+1ten Bildes 110 der aufbereiteten Bildfolge $s_n(x,y)$, in denen das Datenbit $d_0$ des i-ten Pakets 51 codiert wird, bedeutet dies eine Modulation des Leuchtdichtewerts wie folgt:

$$s_n^*(1,1) = s_n(1,1) + a_n(1,1)$$
$$= s_n(1,1) + c(d_i(1,1) - 0,5)$$

$$s_{n+1}^*(1,1) = s_{n+1}(1,1) + a_{n+1}(1,1)$$
$$= s_{n+1}(1,1) - c(d_i(1,1) - 0,5)$$

oder, wenn die aufbereitete Bildfolge $s_n(x,y)$ noch keine Bilddoppel besitzt:

$$s_n^*(1,1) = s_n(1,1) + a_n(1,1)$$
$$= s_n(1,1) + c(d_i(1,1) - 0,5)$$

$$s_{n+1}^*(1,1) = s_n(1,1) + a_{n+1}(1,1)$$
$$= s_n(1,1) - c(d_i(1,1) - 0,5)$$

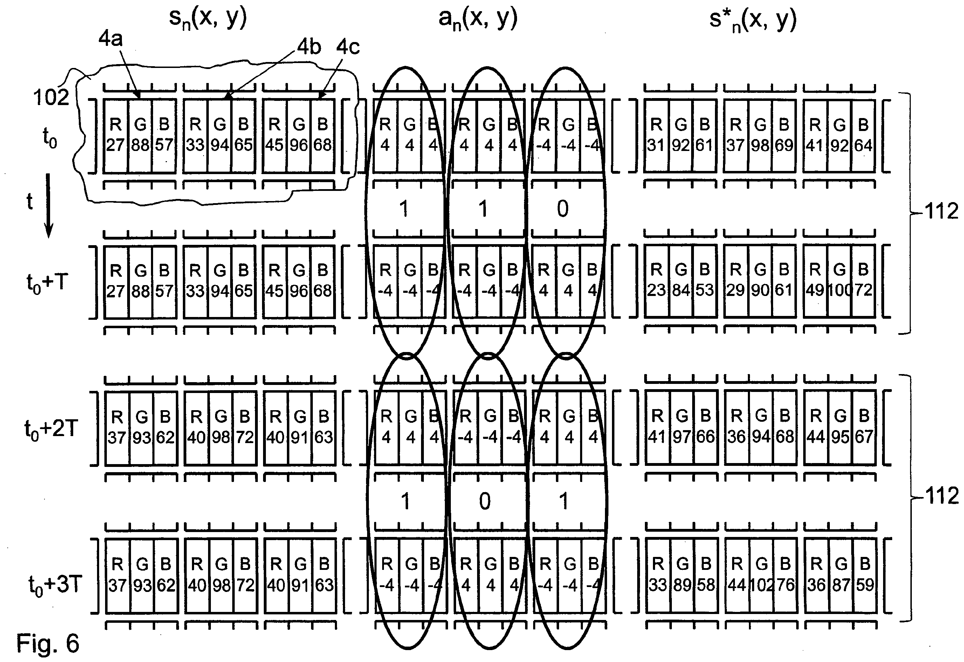

Die resultierende modulierte Bildfolge $s_n^*(x,y)$ bildet das Bildschirmsignal (Ansteuersignal für die Pixel) und enthält zeitlich modulierte Leuchtdichteinformationen, mit denen die einzelnen Pixel 4 des Bildschirms 102 der bildgebenden Vorrichtung 1 angesteuert werden. Figur 6 veranschaulicht diese zeitlich differenzielle Leuchtdichtemodulation bei 8-Bit Signalamplituden (0 bis 255).

Figur 6 zeigt zwölfmal denselben Ausschnitt des Bildschirms 102, der drei nebeneinander liegende Pixel 4a, 4b, 4c enthält. Jedes Pixel 4a, 4b, 4c besteht aus drei Licht emittierenden Elementen, beispielsweise LEDs, die Licht in den Farben rot, grün und blau emittieren. Daher können die Pixel 4a, 4b, 4c auch als RGB-Pixel und die Leuchtdichtewerte der einzelnen Elemente eines Pixels 4a, 4b, 4 als RGB-Tripel bezeichnet werden. Die erste Spalte zeigt einen Ausschnitt von Bildinformationen der zu visualisierenden aufbereiteten Bildfolge $s_n(x,y)$. Die Bildinformationen sind Leuchtdichtewerte für die einzelnen Licht emittierenden Elemente der RGB Pixel 4a, 4b, 4c. Die zweite Spalte zeigt einen Ausschnitt von Werten der aufbereiteten Datenfolge $a_n(x,y)$, die den Pixeln 4a, 4b, 4c zugeordnet sind. Die dritte Spalte zeigt die Summe der Werte der ersten und zweiten Spalte, d.h. die Werte der modulierten Bildfolge $s_n^*(x,y)$, mit denen die Pixel 4a, 4b, 4c angesteuert werden.

Die erste Zeile der Figur 6 zeigt einen ersten Zeitpunkt $t_0$, zu dem ein erstes Bild $s_0(x,y)$ der aufbereiteten Bildfolge $s_n(x,y)$ und ein erstes pixelbezogenes Paket $a_0(x,y)$ der aufbereiteten Datenfolge $a_n(x,y)$ vorliegt. Es gilt $t_n = nT$ mit n = 0, wobei n das n-te Bild und T der zeitliche Abstand zweier Bilder ist, z.B. 10ms. Die zweite Zeile zeigt einen zweiten Zeitpunkt $t_1 = t_0 + T$, zu dem ein zweites Bild $s_1(x,y)$ der aufbereiteten Bildfolge $s_n(x,y)$ und ein zweites pixelbezogenes Paket $a_1(x,y)$ der aufbereiteten Datenfolge $a_n(x,y)$ vorliegt. Wie man anhand der identischen Leuchtdichtewerte der Pixel 4a, 4b, 4c erkennen kann, sind das erste und das zweite Bild identisch. Entsprechend zeigen die dritte und vierte Zeile einen dritten und vierten Zeitpunkt $t_2 = t_0 + 2T$, $t_3 = t_0 + 3T$, zu denen ein drittes Bild $s_2(x,y)$ und ein viertes Bild $s_3(x,y)$ der aufbereiteten Bildfolge $s_n(x,y)$ sowie ein drittes pixelbezogenes Paket $a_2(x,y)$ und ein viertes pixelbezogenes Paket $a_3(x,y)$ der aufbereiteten Datenfolge $a_n(x,y)$ vorliegen. Auch bei dem dritten und vierten Bild wird anhand der identischen Leuchtdichtewerte der Pixel 4a, 4b, 4c in der ersten Spalte deutlich, dass diese identisch sind. Somit bilden das erste und das zweite Bild $s_0(x,y)$, $s_1(x,y)$ und das dritte und das vierte Bild $s_2(x,y)$, $s_3(x,y)$ jeweils ein Bildpaar 112.

Bei den in der zweiten Spalte auszugsweise dargestellten Werten der aufbereiteten Datenfolge $a_n(x,y)$ ist eine bipolare Modulation und ein Modulationsfaktor c= 8 verwendet. Die den drei Pixeln 4a, 4b, 4c zugeordneten Bits, die in dem Bildpaar 112 codiert werden, haben die logischen Werte 1, 1 und 0. Nach der zuvor dargestellten Verarbeitungsvorschrift ergibt sich deshalb bei der aufbereiteten Datenfolge $a_n(x,y)$ für das erste pixelbezogene Paket $a_0(x,y)$ für den ersten Pixel 4a und den zweiten Pixel 4b jeweils der Wert +8(1 - 0,5) = 4, und für den dritten Pixel 4c der Wert +8(0 - 0,5) = -4. Für das zweite pixelbezogene Paket $a_1(x,y)$ ergibt sich für den ersten Pixel 4a und den zweiten Pixel 4b jeweils entsprechend der Wert -8(1 - 0,5)= -4, und für den dritten Pixel 4c der Wert -8(0 - 0,5) = +4. Es ist erkennbar, dass in diesem Beispiel allen einen RGB-Pixel 4 bildenden, Licht emittierenden Elementen derselbe Wert zugeordnet ist. Den einzelnen RGB-Elementen sind also keine verschiedenen Modulationswerte zugeordnet. Dies bedeutet, dass die Farbe eines Pixels 4a, 4b, 4c, die sich gerade durch das Verhältnis der Helligkeiten der RGB-Elemente zueinander ergibt, durch die Modulation nicht verändert wird. Es wird also in diesem Beispiel lediglich die Gesamthelligkeit eines RGB-Pixels 4 verändert.

Die den Pixeln 4a, 4b, 4c zugeordneten logischen Werte des pixelbezogenen Pakets zum dritten Zeitpunkt sind 1, 0 und 1. Entsprechend ergibt sich nach der zuvor dargestellten Verarbeitungsvorschrift in der aufbereiteten Datenfolge $a_n(x,y)$ für das dritte pixelbezogene Paket $a_2(x,y)$ für das erste Pixel 4a und das dritte Pixel 4c jeweils der Wert +8(1 - 0,5)= 4, und für das zweite Pixel 4b der Wert +8(0 - 0,5) = -4. Für das vierte pixelbezogene Paket $a_3(x,y)$ ergibt sich für das erste Pixel 4a und das dritte Pixel 4c entsprechend jeweils der Wert -8(1 - 0,5)= -4, und für das zweite Pixel 4b der Wert -8(0 - 0,5) = +4.

Die in der dritten Spalte gezeigten Werte der modulierten Bildfolge $s_n^*(x,y)$ ergeben sich aus der Summenbildung der Werte in der ersten und zweiten Spalte für jedes Pixel 4a, 4b, 4c respektive für jedes Licht emittierende Element eines jeden Pixels 4a, 4b, 4c. Die Werte in der dritten Spalte sind diejenigen Leuchtdichtewerte, mit denen die Pixel 4a, 4b, 4c des Bildschirms 102 angesteuert werden. Erfolgt dies für alle Pixel eines HD-Fernsehers 1, d.h. bei für 1920x1080 = 2.073.600 Pixel, ergibt sich bei einer Bildfrequenz von 100 Hz, d.h. einem zeitlichen Bildabstand von 10ms unter Verwendung eines Bildpaares (20ms) zur Codierung eines Datenpakets eine Datenrate von ca. 50 Bit/s pro Pixel 4 (pro RGB-Tripel) und eine Gesamtdatenrate von ca. 100Mbit/s.

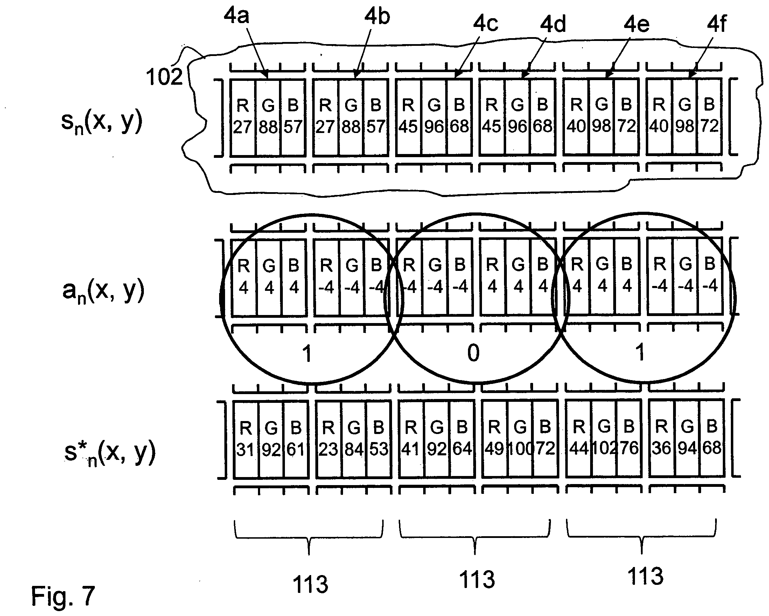

Figur 7 zeigt eine zweite Ausführungsvariante, bei der eine räumlich differenzielle Modulation der Daten 50 mit einer Signalamplitude der Leuchtdichtewerte von 0-255 erfolgt.

Die erste Zeile veranschaulicht einen Ausschnitt des Bildschirms 102 mit sechs RGB-Pixeln 4a bis 4f, die mit den Leuchtdichtewerten der aufbereiteten Bildfolge $s_n(x,y)$ angesteuert werden. Die zweite Zeile zeigt die Werte der Datenfolge, mit denen diese Pixel 4a bis 4f moduliert werden. Die dritte Zeile zeigt die sechs Pixel 4a bis 4f, wie sie mit den Leuchtdichtewerten der resultierenden modulierten Bildfolge $s_n^*(x,y)$ angesteuert werden.

Sowohl die aufbereitetete Bildfolge $s_n(x,y)$ als auch die aufbereitete Datenfolge $a_n(x,y)$ sind hier anders ausgebildet, um die zu übertragenden Daten in die auf dem Bildschirm 102 zu visualisierenden Bilder 110 zu integrieren bzw. in diesen Bildern 110 zu codieren. Die Codierung eines Pakets 51 an Daten 50 erfolgt hier nicht in einem Bildpaar 112 aufeinanderfolgender identischer Bilder 110, sondern in einem einzigen Bild 110. In dem diesem Bild 110 zeitlich nächstfolgenden Bild 110 werden dann die Bits 52 des nächsten Pakets 51 codiert.

Die Bilddaten der Rohbilddatenfolge $b_m(x,y)$ werden derart aufbereitet, dass die Zeilen und/ oder Spalten der Bilder 110 der Rohbilddatenfolge $b_m(x,y)$ gedoppelt werden, so dass neben jedem Bildpunkt 111 ein identischer zweiter Bildpunkt liegt. Dies bedeutet, dass zwei nebeneinanderliegende Pixel 4 mit denselben Leuchtdichtewerten angesteuert werden. Es gilt dann bei der aufbereiteten Bildfolge $s_n(x,y)$: $s_n(i,j) = s_n(i+1,j)$. Dies ist in Figur 7 für eine spaltenweise Bildpunktdopplung veranschaulicht, so dass identische Bildpunktpaare bzw. identisch angesteuerte Pixelpaare 113 vorliegen. Die identische Ansteuerung ist anhand der gleichen Leuchtdichtewerte zweier hier horizontal benachbarter Pixel 4 erkennbar. So besitzen das erste und zweite Pixel 4a, 4b, das dritte und vierte Pixel 4c, 4d und das fünfte und sechste Pixel 4e und 4f gleiche Leuchtdichtewerte.

Da bei einer Bildpunktdopplung in nur eine Raumdimension die zu visualisierenden Bilder auch nur in einer Bildrichtung hinsichtlich der darstellbaren örtlichen Auflösung reduziert werden, ist es sinnvoll die Bildpunktdopplung zusätzlich auch in die andere Raumdimension vorzunehmen, so dass aus einem Bildpunkt 111 eine 2x2 Bildpunktgruppe entsteht, deren vier Bildpunkte identische Bildinformationen enthalten. Entsprechend werden dann bei der bildgebenden Vorrichtung 1 immer 2x2 Pixelgruppen identisch angesteuert. Es gilt dann bei der aufbereiteten Bildfolge $s_n(x,y)$:

$$s_n(i, j) = s_n(i+1, j) = s_n(i, j+1) = s_n(i+1, j+1).$$

Da bei der räumlich differenziellen Modulation keine Bilddoppel erzeugt werden müssen, können die Rohbildfolge $b_m(x,y)$ und die aufbereitete Bildfolge $s_n(x, y)$ dieselbe Zeitbasis bzw. denselben Index und folglich dieselbe Bildfrequenz haben, so dass $m = n$ gilt.

Die Verarbeitung und Aufbereitung der zu übertragenden Daten 50 unterscheidet sich ebenfalls gegenüber der Ausführungsvariante "zeitlich differenzielle Modulation". Die zu übertragenden Daten 50 werden zwar zunächst wie in Figur 4 dargestellt in Pakete 51 der Länge L geteilt, die Länge L, d.h. die Anzahl Bits 52 in einem Paket 51 unterscheidet sich jedoch, da nicht jedes Pixel der bildgebenden Vorrichtung 1 zur Codierung eines Bits verwendet werden kann. Erfolgt die Bildpunktdopplung nur in eine Raumdimension, so kann nur jedes zweite Pixel 4, bei einer Bildpunktdopplung in beide Raumdimensionen nur jedes vierte Pixel 4 zur Codierung eines Bits 52 verwendet werden. Entsprechend beträgt die Länge $L = 0,5 \cdot 1920 \times 1080$ bzw. $L = 0,25 \cdot 1920 \times 1080$ Bits 52.

Die der Paketeinteilung folgende Pixelzuordnung der Bits 52 erfolgt derart, dass die zu übertragenden Bits 52 eines i-ten Pakets $P_i$ der Reihe nach jedem zweiten Pixel einer Zeile eines Bildes zugeordnet sind. Da der Grundgedanke der räumlich differenziellen Modulation darin besteht, den Wert eines Bits 52 innerhalb desselben Bildes 110 als Differenz der Helligkeiten zweier identischer, insbesondere benachbarter Bildpunkte eines Bildpunktpaares zu codieren bzw. als Differenz der Leuchtdichten zweier identischer, insbesondere benachbarter Pixel eines Pixelpaares 113 zu codieren, wird dem ersten Bildpunkt dieses Bildpunktpaares ein den Bitwert des entsprechenden Bits 52 angebender Wert addiert und vom dem zweiten Bildpunkt dieser Wert subtrahiert.

Es wird somit ein pixelbezogenes Paket $d_i(x,y)$ gebildet, in dem die Datenbits $d_0, d_1, d_2 \ldots d_{L-1}$ wie folgt enthalten sind:

$$P_i = [d_0, d_1, d_2 \ldots d_{L-1}] \rightarrow \quad d_i(1,1) = d_0, \qquad \text{(erstes Pixel 4 links oben)}$$
$$d_i(1,2) = -d_0,$$
$$d_i(1,3) = d_1,$$
$$d_i(1,4) = -d_1,$$
$$\ldots$$
$$d_i(1080,1919) = d_{L-1} \qquad \text{(letzte Zeile)}$$
$$d_i(1080,1920) = -d_{L-1}, \qquad \text{(letztes Pixel 4 rechts unten)}$$

Sofern in beiden Raumdimensionen eine Dopplung der Bildpunkte erfolgt, gilt zusätzlich: $d_i(2,1) = d_0$, $d_i(2,2) = -d_0$. Dies bedeutet, dass jede zweite Zeile des pixelbezogenen Paketes $d_i(x,y)$ identisch zur vorherigen Zeile ist. Es ist jedoch auch möglich, dass jede zweite Zeile zur unmittelbar vorherigen Zeile invertiert ist, so dass sich ein einem bestimmten Bitwert entsprechender Modulationswert nicht nur aus der Differenz der Leuchtdichtewerte zweier horizontal benachbarter Pixel 4, sondern auch aus der Differenz zweier vertikal benachbarter Pixel 4 ergibt.

Auch bei der zweiten Ausführungsvariante kann eine unipolare oder eine bipolare Modulation erfolgen. Wie zuvor erläutert, wird bei einer unipolaren Modulation nur im Falle einer logischen Eins eines Bits 52 ein Leuchtdichtewert verändert, nicht dagegen bei einer logischen Null. Dagegen erfolgt bei einer bipolaren Modulation sowohl bei einer logischen Eins als auch bei einer logischen Null eine Leuchtdichteänderung. Das Beispiel gemäß Figur 7 zeigt eine bipolare Modulation. Dies ist an den den RGB-Pixeln 4a bis 4f zugeordneten Modulationswerten (siehe zweite Zeile) erkennbar, die sowohl bei einer logischen Eins, die dem ersten und dem dritten Bildpunktpaar bzw. Pixelpaar 113 zugeordnet sind, als auch bei einer logischen Null, die dem zweiten Bildpunktpaar bzw. Pixelpaar 113 zugeordnet ist, von null verschieden sind. Um dies zu erreichen, erfolgt eine Korrektur des unaufbereiteten pixelbezogenen Pakets $d_i(x,y)$, indem ihm die halbe Datenbitamplitude (-0,5) abgezogen wird. Eine logische Eins wird dann zu +0,5 und eine logische Null zu -0,5.

Darüber hinaus kann auch bei der zweiten Ausführungsvariante ein Modulationsfaktor c verwendet werden, um die Modulationsamplitude einzustellen. Dies erfolgt, indem das korrigierte pixelbezogene Paket $d_i(x,y)$ mit dem Modulationsfaktor c multipliziert wird. Wenn die Bits 52 des i-ten Pakets 51 dem n-ten Bild der aufbereiteten Bildfolge $s_n(x,y)$ zugeordnet werden, ergibt sich dann als aufbereitete Datenfolge $a_n(x,y) = c(d_i(x,y) - 0,5)$.

Im Ergebnis enthält bei einer Anzahl von N Paketen die aufbereitete Datenfolge $a_n(x,y)$ auch N aufbereitete pixelbezogene Datenpakete $a_i(x,y)$, die mit N Bildern der aufbereiteten Bildfolge $s_n(x,y)$ addiert werden können.

In Figur 7 zeigt die zweite Zeile, dass den Pixelpaaren 113 die logischen Werte Eins, Null und Eins aufmoduliert werden sollen. Dabei wird wie im Beispiel nach Figur 6 ein Modulationsfaktor der Höhe c = 8 verwendet. Hierdurch wird aus einer logischen Eins ein Modulationswert +4 und aus einer logischen Null ein Modulationswert -4. Dem jeweils ersten RGB-Pixel 4a, 4c, 4e eines Pixelpaares 113 wird dadurch jeweils der im Vorzeichen nicht veränderte Bitwert, dem jeweils zweiten RGB-Pixel 4b, 4d, 4f eines Pixelpaares 113 dagegen jeweils der im Vorzeichen veränderte Bitwert zugewiesen,

Die Integration der zu übertragenden Daten 50 in Gestalt der aufbereiteten Datenfolge $a_n(x,y)$ in die aufbereitete Bildfolge $s_n(x,y)$ erfolgt wieder wie in Figur 5 gezeigt mittels des Addierers 105, der jedem Bild 110 der aufbereiteten Bildfolge $s_n(x,y)$ ein aufbereitetes pixelbezogenes Datenpaket $a_i(x,y)$ der Datenfolge $a_n(x,y)$ addiert.

Die resultierende, modulierte Bildfolge $s_n{}^*(x,y)$ besteht dann aus einer Folge von Bildern 110, wobei in jedem Bild die Differenz jeweils zweier benachbarter Bildpunkte 111 den Wert des dem ersten dieser Bildpunkte 111 zugeordneten Bits 52 des in dem entsprechenden Bild codierten Datenpakets 51 trägt.

Für die Bildpunkte an den Koordinaten x=1, y=1 und x=2, y=1 des n-ten Bildes 110 der aufbereiteten Bildfolge $s_n(x,y)$, die in denen das Datenbit $d_0$ des i-ten Pakets 51 codiert wird, bedeutet dies eine Modulation des Leuchtdichtewerts wie folgt:

$$s_n{}^*(1,1) = s_n(1,1) + c(d_0 - 0,5)$$

$$s_n{}^*(2,1) = s_n(2,1) - c(d_0 - 0,5).$$

Die aus der Addition resultierende modulierte Bildfolge $s_n{}^*(x,y)$ ist in der dritten Zeile in Figur 7 dargestellt. Sie bildet das Bildschirmsignal (Ansteuersignal für die Pixel) und enthält räumlich modulierte Leuchtdichteinformationen, mit denen die einzelnen Pixel 4 des Bildschirms 102 der bildgebenden Vorrichtung 1 angesteuert werden. Figur 7 veranschaulicht diese räumlich differenzielle Leuchtdichtemodulation bei einer 8-Bit Signalamplitude (Werte von 0 bis 255) und einer Modulationsamplitude der Höhe 4.

Es sei noch angemerkt, dass auch bei der zweiten Variante alle Licht emittierenden Elemente, d.h. die Leuchtpunkte in den Farben rot, grün und blau eines Pixels 4, identisch moduliert werden. Die Farbe eines Pixels 4 wird folglich bei der hier beispielshaft beschriebenen räumlichen Modulation nicht verändert. Daher ist allen drei Leuchtelementen eines Pixels 4 stets derselbe Wert zugeordnet, der einem Pixel 4 eines pixelbezogenen Pakets $a_i(x,y)$ aus der aufbereiteten Datenfolge $a_n(x,y)$ zur Modulation zugeordnet ist.

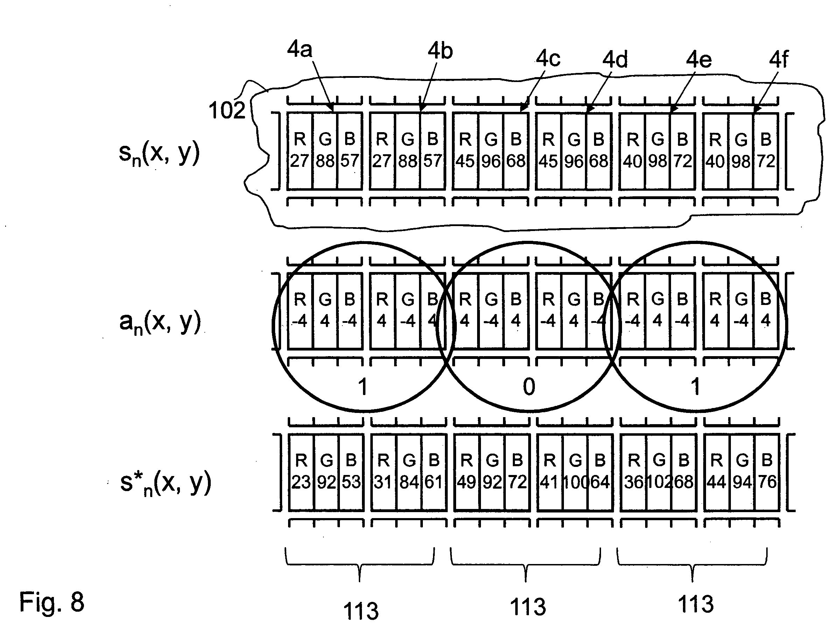

Dies ist bei der dritten Ausführungsvariante anders, bei der bewusst eine räumlichfarbliche Modulation erfolgt. Dies wird anhand von Figur 8 veranschaulicht.

Die aufbereitete Bildfolge $s_n(x,y)$ ist hier zunächst auf dieselbe Art gebildet wie bei der zweiten Variante, weil auch die farbliche Modulation räumlich, d.h. in demselben Bild 110 erfolgt. Aus diesem Grunde ist die erste Zeile der Figur 8 identisch zur ersten Zeile der Figur 7. Somit ist auch bei der dritten Variante in den Bildern 110 der aufbereiteten Bildfolge $s_n(x,y)$ die Spalten y und/ oder Zeilen x gedoppelt, so dass zwei nebeneinander liegende Bildpunkte 111 identisch sind.

Ein Unterschied besteht jedoch in der Bildung der aufbereiteten Datenfolge $a_n(x,y)$, die nun nicht mehr für alle RGB-Leuchtelemente eines Pixels 4 denselben Modulationswert vorsieht, sondern zumindest einem der RGB-Leuchtelemente einen anderen Modulationswert als den anderen RGB-Leuchtelementen aufprägt. Im Ergebnis ändert sich dadurch die Farbe des entsprechenden Pixels 4. Die aufbereitete Datenfolge $a_n(x,y)$ muss daher für die einzelnen Leuchtelemente der einzelnen Pixel 4 gebildet werden. Dies kann dadurch erfolgen, dass jedes pixelbezogene Paket $a_i(x,y)$ der Datenfolge $a_n(x,y)$ als Tripel dargestellt wird, dessen Elemente den Leuchtelementen rot, grün und blau der Pixel 4 zugeordnet sind:

$$a_n(x,y) = \begin{pmatrix} a_{n,R}(x,y) \\ a_{n,G}(x,y) \\ a_{n,B}(x,y) \end{pmatrix}$$

In dem Beispiel gemäß Figur 8 haben die von den drei dargestellten Pixelpaaren 113 zu übertragenden Bits 52 wie im vorherigen Beispiel die logischen Werte Eins, Null und Eins. Die in dem Beispiel der räumlichen Modulation gebildete aufbereitete Datenfolge $a_n(x,y)$ kann einem der Tripelelemente $a_{n,R}(x,y)$, $a_{n,G}(x,y)$, $a_{n,B}(x,y)$ entsprechen, so dass an dieser Stelle auf die vorherigen Ausführungen zur Bildung der Datenfolge $a_n(x,y)$ verwiesen wird.

In Figur 8 ist dies beispielsweise für das zweite Tripelelement $a_{n,G}(x,y)$ der Fall, das jeweils das grüne Leuchtelement der Pixel 4 moduliert, so dass gilt:

$$a_{n,G}(x,y) = c(a_i(x,y) - 0{,}5).$$

Es könnte jedoch auch ein anderes Tripelelement mit der zuvor bestimmten Datenfolge $a_n(x,y)$ gleichgesetzt werden. Die anderen beiden Tripelelemente $a_{n,R}(x,y)$, $a_{n,B}(x,y)$ können gemäß einer einfachen Variante eine invertierte Folge des zuvor zugewiesenen ersten Tripelelements $a_{n,G}(x,y)$ sein, so dass sich dann entsprechend ergibt:

$$a_{n,R}(x,y) = a_{n,B}(x,y) = -c(a_i(x,y) - 0{,}5)$$

Es sei auch hier angemerkt, dass eine bipolare Modulation (Korrektur um 0,5, d.h. einen halben Bitwert) bei der farblichen Modulation angewendet werden kann, jedoch nicht zwingend muss.

Ferner sei angemerkt, dass der Modulationsfaktor c für alle drei RGB-Leuchtelemente, d.h. bei allen drei Tripelelementen, identisch sein kann, jedoch alternativ auch unterschiedliche Modulationsfaktoren $a_R$, $a_G$, $a_B$ für die den einzelnen RGB-Leuchtelementen jeweils zugeordneten aufbereiteten Datenfolgen $a_{n,R}(x,y)$, $a_{n,G}(x,y)$, $a_{n,B}(x,y)$ verwendet werden können, die jeweils vorzugsweise zwischen 3 und 8 liegen können. Bei dem in Figur 8 dargestellten Beispiel sind identische Modulationsfaktoren $c_R = c_G = c_B = 8$ gewählt.

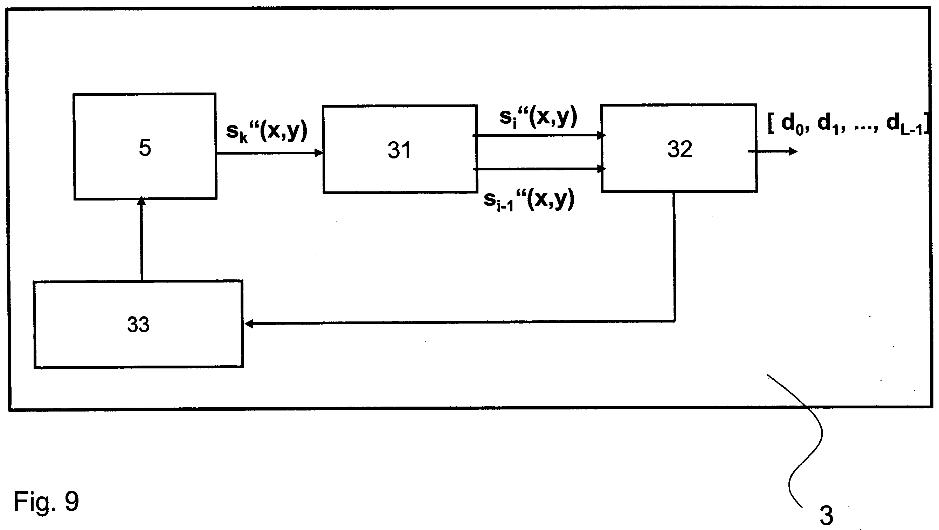

Die Rückgewinnung der in den Bildern 110 codierten Daten, die auf dem Bildschirm 102 der bildgebenden Vorrichtung 1 visualisiert werden, erfolgt, indem die Kamera 5 des Empfängers 3 auf den Bildschirm 102 gerichtet wird und die visualisierten Bilder 110 als Bewegtbilder aufnimmt. Dies ist anhand von Figur 9 veranschaulicht, die die hierfür notwendigen Funktionseinheiten des Empfängers 3 zeigt. Der Empfänger 3 umfasst die Kamera 5, einen Bildspeicher 31, einen Demodulator 32 mit Decoder und eine Kamerasteuerung 33.

Es sei angemerkt, dass die Kamera 5 nicht unbedingt integrativer Bestandteil des die Verarbeitungs- und Steuerungseinheiten umfassenden Teils des Empfängers 3 sein muss. Sie kann vielmehr auch eine extern hierzu angeordnete Kamera sein, die über Kabel oder per Funk mit den anderen Komponenten des Empfängers 3 verbunden ist.

Die auf den Bildschirm 102 gerichtete Kamera 5 zeichnet die mit den integrierten Daten 50 modulierten Bilder 110 mit einer entsprechenden Abtastfrequenz auf und speichert sie als Bildfolge $s_k''(x, y)$ in dem Bildspeicher 31 ab.

Die aufgezeichnete Bildfolge $s_k''(x, y)$ im Bildspeicher 31 umfasst bei zeitlich differenzieller Modulation eine Folge von paarweise modulierten Bildern $s_{i-1}''(x, y)$, $s_i''(x, y)$ d.h. jeweils zwei zusammengehörige Bilder, in denen jeweils ein Datenpaket $P_i$ codiert ist. Die Decodierung erfolgt über die Differenzbildung der jeweils paarweise modulierten Bilder $s_{i-1}''(x, y)$, $s_i''(x, y)$, die im Bildspeicher 31 gleichzeitig vorliegen müssen, um die Decodierung vornehmen zu können. Die paarweise modulierten Bilder $s_{i-1}''(x, y)$, $s_i''(x, y)$ werden hierzu aus dem Bildspeicher 31 ausgelesen und dem Demodulator 32 zugeführt, der die Differenzbildung vornimmt.

Das codierte Datenbit $d_0$ wird durch die Bildung der Differenz der Helligkeiten des Bildpunktes an den Koordinaten x=1, y=1 des aufgenommenen Bildpaares $s_{i-1}''(x, y)$, $s_i''(x, y)$ ermittelt:

$$\text{if } (s_{i-1}''(1, 1) - s_i''(1, 1)) > 0 \text{ THEN } d_0 = 1, \text{ ELSE } d_0 = 0;$$

Damit bei einer zeitlich differenziellen Modulation keine Verwischung der Daten 50 auftritt, ist eine möglichst gute zeitliche Synchronisation mit dem Bildschirm 102 sinnvoll. Hierzu kann die Signalqualität im Demodulator 32 ausgewertet und zur Regelung der Abtastzeitpunkte genutzt werden. Je höher die örtliche Auflösung der Kamera, d.h. je mehr Kamerapixel im Vergleich zur Feinheit des Datenmusters zur Verfügung stehen, und je besser der Bildausschnitt gewählt wird, desto zuverlässiger erfolgt die Decodierung. "Feinheit des Datenmusters" bezieht sich hier auf die Anzahl der auf die Bildschirmfläche verteilten Bits 52 eines Pakets 51, bzw. auf die Anzahl der einem Bit jeweils zugeordneten Bildschirmpixel 4. So ist die Feinheit umso geringer, je größer die Pixelgruppen, beispielsweise von 2x2, 3x3, 4x4 usw. Pixeln 4, gewählt werden, die mit demselben Bit 52 moduliert, d.h. identisch angesteuert werden.

Der Demodulator 32 kann Informationen zur Steuerung des Bildausschnitts liefern, die über eine Zoomfunktion der Kamera 5 realisiert werden kann. Die Steuerung des Bildausschnitts und das Zoomen werden von der Kamerasteuerung 33 übernommen, die die Informationen zur Steuerung vom Demodulator 32 erhält.

Eine unvermeidliche Fehlanpassung zwischen dem Bildpunktraster des Bildschirms 102 und dem Bildpunktraster der Kamera 5 kann durch eine Interpolationsfilterung im Demodulator 32 kompensiert werden. Hierzu sind verschiedene Verfahren denkbar. Besonders einfach und robust gelingt diese Interpolation, wenn die Auflösung des Kamerabildes deutlich höher ist als die des Datenrasters. So kann beispielsweise eine 8 Megapixel Kamera 5 mit einer Auflösung von 3840x 2160 Pixel verwendet werden, die entsprechend viermal so hoch ist wie das Datenraster, das durch Modulation jedes Pixels eines HD-Fernsehers entsteht. Es kommen dann vier Kamerapixel auf einen Bildschirmpixel 4. Zusätzlich kann auch die Auflösung des Datenrasters auf 25% reduziert werden, indem beispielsweise Pixelgruppen von 2x2 Pixeln identisch angesteuert werden. Damit würde die Auflösung des Kamerabildes 16x höher als die Auflösung des Datenrasters sein.

Vorzugsweise kann bei der Aufzeichnung der Bilder durch die Kamera 5 die im Stand der Technik hinreichend bekannte Bildstabilisierung zur Anwendung kommen, um zwischen den beiden Bildern eines Bildpaares eine örtliche Verschiebung, d.h. ein Verwackeln zu vermeiden. Sofern die Anordnung von Empfänger 3 relativ zum Sender 1 jedoch stationär ist, kann auf eine Bildstabilisierung verzichtet werden.

Figur 10 zeigt eine Detaildarstellung des Demodulators 32 von Figur 9. Er umfasst einen Subtrahierer 37 zur Bildung der Differenz der aufgenommenen Bildpaare $s_{k-1}"(x, y, k-1) - s_k"(y, x, k)$, ein 2D Interpolationsfilter 34, einen Detektor 35 und eine Signalqualitätsauswertung 36. Das 2D Interpolationsfilter 34 ist bevorzugt ein räumlich zweidimensionaler Tiefpass, wie er bei der Konvertierung von Videosignalen in bekannter Weise eingesetzt wird, um unterschiedliche Abtastraster anzupassen. Der Detektor 35 tastet das gefilterte Signal ab und trifft die Entscheidung, ob die Amplitudendifferenz positiv oder negativ ist, um daraus eine logische Null bzw. Eins zu detektieren.

Die Funktionsweise der Signalqualitätsauswertung 36 ist wie folgt: bei geringen Differenzwerten ist offenbar die Kamera 5 zeitlich nicht gut synchronisiert. Durch Verschieben der Aufnahmezeitpunkte kann die Amplitude vergrößert werden. Zur zeitlichen Synchronisation kann allerdings auch der eigentliche Bildinhalt genutzt werden, da insbesondere bei stark bewegten Szenen oder Szenenwechseln hier größere Amplitudenänderungen auftreten.

Sind die Bildpunkte in der Abbildung zu klein, so kann durch Zoomen der Ausschnitt besser angepasst werden. Zur Unterstützung einer Regelung des Zoomobjektivs können auf der Sendeseite zusätzlich zu den Nutzdaten 50 spezielle Informationen im Sinne eines Rahmens um den genutzten Bildbereich hinzugefügt werden und/ oder Information über maximale, insbesondere zeitliche Differenz und/ oder räumliche Verteilung als Input für die Kamerasteuerung 33. Alternativ können Informationen über maximale, insbesondere zeitliche Differenz und/ oder räumliche Verteilung auch von der Signalqualitätsauswertung 36 ermittelt werden und als Input für die Kamerasteuerung 33 dienen.

**Patentansprüche**

1. Optisches Daten (50)-Freiraum-Übertragungsverfahren von einem Sender (1) zu mindestens einem Empfänger (3), bei dem der Sender (1) eine bildgebende Vorrichtung mit einer Vielzahl an Pixeln (4) ist, die von Bilder (110) repräsentierenden Bilddaten $(si(x,y))$ einer Bildfolge $(s_n(x,y))$ angesteuert werden und die zur Übertragung vorgesehenen Daten (50) in eine Datenfolge $(d_n(x,y))$ aus einer eine Anzahl (L) Datenbits (52) umfassender Datenpakete (51) aufgeteilt werden und jedes Datenbit (52) mindestens einem der Pixel (4) zugeordnet wird, wobei die Datenpakete (51) jeweils auf die Bilddaten $(s_i(x,y))$ mindestens eines Bildes (110) der Bildfolge $(s_n(x,y))$ pixelbezogen aufmoduliert werden, und die Modulation der Bilddaten $(s_i(x,y))$ zeitlich und/ oder räumlich differenziell erfolgt, wobei der Wert eines Datenbits (52) auf zwei Amplitudenwerte derart aufgeteilt wird, dass durch die Bildung der Differenz dieser Amplitudenwerte das zu übertragende Datenbit (52) zurückgewonnen wird, **dadurch gekennzeichnet, dass**

    - bei der zeitlich differenziellen Modulation in der Bildfolge $(s_n(x,y))$ zwei zeitlich auf einander folgende Bilder (110) mit gleichen Bilddaten $(s_i(x,y))$ versehen werden, und die Aufmodulation den Bildinhalt der beiden Bilder (110) derart ändert, dass die Differenz der beiden Bilder (110) in jedem Pixel (4) dem Wert des von dem jeweiligen Pixel (4) jeweils zu übertragenden Datenbits (52) entspricht und das Mittel der beiden Bilder (110) für jedes Pixel (4) gleich bleibt, oder

    - bei der räumlich differenziellen Modulation die Zeilen und/ oder Spalten der Bilder (110) in der Bildfolge $(s_n(x,y))$ gedoppelt werden, so dass neben jedem Bildpunkt ein identischer zweiter Bildpunkt liegt und zwei nebeneinander liegende Pixel (4) mit identischen Teilbildsignalen angesteuert werden, und zur Übertragung eines Datenbits (52) zwei nebeneinander liegende, ein Pixelpaar bildende Pixel (4) innerhalb desselben Bildes (110) verwendet werden, wobei die einzelnen Datenbits (52) eines Datenpakets (51) auf diejenigen Teilbildsignale aufmoduliert werden, die jeweils das erste Pixel (4) des Pixelpaares ansteuern und die anderen Teilbildsignale, die jeweils das zweite Pixel (4) des Pixelpaares ansteuern, jeweils invertiert moduliert werden,

und dass der Empfänger (3) eine beabstandet zur bildgebenden Vorrichtung (1) anzuordnende videoaufnahmefähige Kamera (5) ist, die die Pixel (4) aufnimmt und aus den Lichtemissionen der Pixel (4) die Datenbits (52) eines Pakets (51) decodiert und in die ursprünglichen Daten (50) zurückwandelt.

2. Verfahren nach Anspruch 1, **dadurch gekennzeichnet, dass** bei der zeitlich differentiellen Modulation die Anzahl (L) Datenbits (52) der Pakete (51) der Anzahl der Pixel (4) der bildgebenden Vorrichtung (1) entspricht, so dass jeder Pixel (4) von jeweils einem der Datenbits (52) individuell moduliert angesteuert wird.

3. Verfahren nach Anspruch 1, **dadurch gekennzeichnet, dass** bei der zeitlich differentiellen Modulation die Anzahl (L) Datenbits (52) der Pakete (51) kleiner als die Anzahl der Pixel (4) ist und nur ein Teil der Pixel (4) von jeweils einem der Datenbits (52) individuell moduliert angesteuert wird.

4. Verfahren nach einem der Ansprüche 1 oder 3, **dadurch gekennzeichnet, dass** bei der zeitlich differentiellen Modulation eine Vielzahl an Gruppen, insbesondere Blöcken, aus jeweils mehreren Pixeln (4) gebildet ist und die Anzahl (L) Datenbits (52) der Pakete (51) der Anzahl der gebildeten Gruppen entspricht, wobei jede Gruppe von jeweils einem der Datenbits individuell moduliert angesteuert und alle Pixel (4) derselben Gruppe identisch moduliert angesteuert werden.

5. Verfahren nach einem der vorherigen Ansprüche, **dadurch gekennzeichnet, dass** durch die Datenfolge ($d_n(x,y)$) die Leuchtdichte und/ oder die Farbe der Pixel (4) moduliert wird.

6. Verfahren nach einem der vorherigen Ansprüche, **dadurch gekennzeichnet, dass** die Modulation bipolar erfolgt.

7. Verfahren nach einem der vorherigen Ansprüche, **dadurch gekennzeichnet, dass** den Bilddaten eines jeden Bildes (110) der Bildfolge ($s_n(x,y)$) ein pixelbezogenes Paket ($d_i(x,y)$) der Datenfolge ($d_n(x,y)$) überlagert wird.

8. Verfahren nach einem der vorherigen Ansprüche, **dadurch gekennzeichnet, dass** im Falle einer zeitlich differentiellen Modulation die Bildfolge ($s_n(x,y)$) aus Bildpaaren (112) aufeinander folgender identischer Bilder (110) mit identischen Bilddaten ($s_i(x,y)$) gebildet wird und dass die Datenfolge ($d_n(x,y)$) aus pixelbezogenen Paketen ($d_i(x,y)$) gebildet ist, von denen jedes zweite pixelbezogene Paket ($d_{2i+1}(x,y)$) dem vorhergehenden ersten pixelbezogenen Paket ($d_{2i}(x,y)$) mit umgekehrtem Vorzeichen entspricht, und dass jedes erste pixelbezogene Paket ($d_{2i}(x,y)$) jedem ersten Bild eines Bildpaares (112) und jedes zweite pixelbezogene Paket ($d_{2i+1}(x,y)$) jedem zweiten Bild des Bildpaares (112) überlagert wird.

9. Bildgebende Vorrichtung (1) zur optischen Übertragung von Daten (50) im freien Raum (2) zu einem Empfänger (3), **dadurch gekennzeichnet, dass** sie zur Ausführung des Verfahrens nach einem der Ansprüche 1 bis 8 eingerichtet ist.

10. Bildgebende Vorrichtung nach Anspruch 9, **dadurch gekennzeichnet, dass** sie ein Flachbildfernseher, Monitor oder grafisches Display ist.

11. Videoaufnahmefähige Kamera (5) zum Empfang von optisch von einem Sender (1) im freien Raum (2) übertragenen Daten (50), **dadurch gekennzeichnet, dass** sie dazu eingerichtet ist, aus den Lichtemissionen von Pixeln (4) des Senders (1) die gemäß dem Verfahren nach einem der Ansprüche 1 bis 8 moduliert angesteuert werden, die zur Modulation verwendeten Datenbits (52) zu decodieren und in die ursprünglichen Daten (50) zurück zu wandeln.

12. Videoaufnahmefähige Kamera nach Anspruch 12, **dadurch gekennzeichnet, dass** sie eine CMOS-Kamera (5) eines Smartphones (3) oder Tablets ist.

## Claims

1. Method for the optical transmission of data (50) in free space from a transmitter (1) to at least one receiver (3) wherein the transmitter (1) is an imaging apparatus having a multiplicity of pixels (4) that are actuated by image data ($s_i(x,y)$) in an image sequence ($s_n(x,y)$) that represent images (110), and the data (50) provided for transmission are split into a data sequence ($d_n(x,y)$) comprising data packets (51) that comprise a number (L) of data bits (52), with each data bit (52) being assigned to at least one of the pixels (4), and the data packets (51) each being modulated onto the image data ($s_i(x,y)$) of at least one image (110) in the image sequence ($s_n(x,y)$) in pixel-based fashion, and the modulation of the image data ($s_i(x,y)$)) being differential in time and/or space, wherein the value of a data bit (52) is split into two amplitude values so that, by calculating the difference between these amplitude values, the data bit (52) being transmitted is recovered, **characterised by**

- two images (110) that are sequential in time being assigned the same image data ($s_i(x,y)$) in the image sequence ($s_n(x,y)$) for the time differential modulation, with the modulation changing the image content of the two images (110) so that the difference between the two images (110) in each pixel (4) corresponds to the value of the respective data bit (52) to be transmitted by the respective pixel (4) and the mean of the two images (110) remains the same for each pixel (4), or

- the rows/and or columns of the images (110) in the image sequence ($s_n(x,y)$) being doubled in the space differential modulation, so that there is an identical second pixel next to each pixel and two adjacent pixels (4) are controlled with identical field signals, and two adjacent pixels (4) forming a pixel pair within the same image (110) are used for the transmission of a data bit (52), wherein the individual data bits (52) of a data packet (51) are modulated on the field signals that respectively control the first pixel (4) of the pixel pair and the other field signals that respectively control the second pixel (4) of the pixel pair are respectively modulated inversely,

and the receiver (3) being a camera (5) capable of video recording, to be arranged at a distance from the imaging apparatus (1), which records the pixels (4) and, from the light emissions of the pixels (4), decodes the data bits (52) of a packet (51) and transforms them back into the original data (50).

2. Method according to claim 1 **characterised by** the number (L) of data bits (52) of the packets (51) with time differential modulation being equal to the number of pixels (4) of the imaging apparatus (1), so that each pixel (4) is controlled respectively by one of the individually modulated data bits (52).

3. Method according to claim 1 **characterised by** the number (L) of data bits (52) of the packets (51) with time differential modulation being less than the number of pixels (4) so that only part of the pixels (4) are controlled respectively by one of the individually modulated data bits (52).

4. Method according to one of the claims 1 or 3, **characterised by** multiple groups, in particular blocks, being formed respectively from several pixels (4) with time differential modulation and the number (L) of data bits (52) of the packets (51) corresponding to the number of groups formed, wherein each group is controlled respectively by one of the individually modulated data bits and all pixels (4) in the same group are controlled with identical modulation.

5. Method according to one of the preceding claims, **characterised by** the data sequence ($d_n(x,y)$) being modulated by the light density and/or colour of the pixels (4).

6. Method according to one of the preceding claims, **characterised by** bipolar modulation.

7. Method according to one of the preceding claims, **characterised by** the image data of each image (110) in the image sequence ($s_n(x,y)$) being overlaid by a pixel-specific packet ($d_i(x,y)$) of the data sequence ($d_n(x,y)$).

8. Method according to one of the preceding claims, **characterised by** the image sequence ($s_n(x,y)$) of image pairs (112) with time differential modulation being formed by consecutive identical images (110) with identical image data ($s_i(x,y)$) and the data sequence ($d_n(x,y)$) being formed by pixel-specific packets ($d_i(x,y)$), of which every second pixel-specific packet ($d_{2i+1}(x,y)$) corresponds to the preceding, first pixel-specific packet ($d_{2i}(x,y)$) with the inverse leading sign, and every first pixel-specific packet ($d_{2i}(x,y)$) overlays every first image of an image pair (112) and every second pixel-specific packet ($d_{2i}+1(x,y)$) overlays every second image of the image pair (112).

9. Imaging apparatus (1) for the optical transmission of data (50) in free space (2) to a receiver (3), **characterised by** being configured to carry out the method according to one of the claims 1 through 8.

10. Imaging apparatus according to claim 9, **characterised by** being a flat screen television, monitor or graphical display.

**11.** Camera capable of video recording (5) for receiving data (50) optically transmitted by a transmitter (1) in free space (2), **characterised by** being configured to decode the data bits (52) used for modulation from the light emissions of pixels (4) of the transmitter (1) controlled by modulation according to one of the claims 1 through 8 and transform them back into the original data (50).

**12.** Camera capable of video recording according to claim 12, **characterised by** being a CMOS camera (5) of a smartphone (3) or tablet.

**Revendications**

**1.** Procédé optique de transmission de données en espace libre (50), entre un émetteur (1) et au moins un récepteur (3), dans lequel l'émetteur (1) est un procédé d'imagerie avec une multiplicité de pixels (4), commandés par des données graphiques ($s_i(x,y)$) d'une suite d'images ($s_n(x,y)$) représentant des images (110) et les données prévues (50) pour la transmission sont séparées en une suite de données ($d_n(x,y)$) composée de paquets de données (51) contenant un nombre (L) de bits de données (52), chaque bit de données (52) étant attribué à au moins un des pixels (4), sachant que chaque paquet de données (51) est modulé en fonction des pixels sur les données graphiques ($s_i(x,y)$) d'au moins une image (110) de la suite d'images ($s_n(x,y)$) et que la modulation des données graphiques ($s_i(x,y)$) est différentielle temporellement et/ou spatialement, la valeur d'un bit de données (52) étant séparée en deux valeurs d'amplitude de manière à ce que le bit de données (52) à transmettre soit récupéré par le calcul de la différence entre ces valeurs d'amplitude, **est caractérisé en ce que**

- deux images (110) consécutives dans la suite d'images ($s_n(x,y)$) se voient attribuer les mêmes données graphiques ($s_i(x,y)$) identiques pour la modulation différentielle temporelle, la modulation modifiant le contenu d'image des deux images (110) de telle façon que la différence des deux images (110) dans chaque pixel (4) corresponde à la valeur du bit de données (52) respectif devant être transmis par chaque pixel (4) et que le moyen des deux images (110) reste le même pour chaque pixel (4), ou
- dans le cas de la modulation différentielle spatiale, les lignes et/ou les colonnes des images (110) dans la suite d'images ($s_n(x,y)$) sont doublées pour qu'il y ait un second pixel identique à côté de chaque pixel et que deux pixels (4) identiques adjacents soient commandés avec des signaux d'image partiels identiques, et deux pixels (4) formant une paire au sein de la même image (110) sont utilisés pour la transmission d'un bit de données (52), sachant que chaque bit de données (52) d'un paquet de données (51) est modulé sur ces signaux d'image partiels commandant respectivement le premier pixel (4) de la paire
- et les autres signaux d'image partiels commandant le second pixel (4) de la paire sont modulés de façon inverse, et que le récepteur (3) est une caméra (5) apte à effectuer un enregistrement vidéo et éloignée du procédé d'imagerie (1) enregistrant les pixels (4) et décodant, à partir des émissions lumineuses des pixels (4), les bits de données (52) d'un paquet (51) pour les reconvertir et obtenir les données (50) originelles.

**2.** Procédé selon la revendication 1, **caractérisé en ce que,** dans le cas de la modulation différentielle temporelle, le nombre (L) de bits de données (52) des paquets (51) est égal au nombre de pixels (4) du procédé d'imagerie (1) de telle façon que chaque pixel (4) soit commandé de façon modulé par un des bits de données (52).

**3.** Procédé selon la revendication 1, **caractérisé en ce que,** dans le cas de la modulation différentielle temporelle, le nombre (L) de bits de données (52) des paquets (51) est inférieur au nombre de pixels (4) et seule une partie des pixels (4) est commandé de façon modulée individuellement par un des bits de données (52).

**4.** Procédé selon la revendication 1 ou 3, **caractérisé en ce que,** dans le cas de la modulation différentielle temporelle, plusieurs groupes, en particulier blocs, sont formés à partir de plusieurs pixels (4), le nombre (L) de bits de données (52) des paquets (51) correspondant au nombre de groupes formés, sachant que chaque groupe est commandé de façon modulée individuellement par un des bits de données et tous les pixels (4) d'un même groupe sont commandés de façon modulée et identique.

**5.** Procédé selon une des revendications précédentes, **caractérisé en ce que** la luminance et/ou la couleur des pixels (4) est modulée par la suite de données ($d_n(x,y)$).

**6.** Procédé selon une des revendications précédentes, **caractérisé en ce que** la modulation se fait de façon bipolaire

**7.** Procédé selon une des revendications précédentes, **caractérisé en ce que** les données graphiques de chaque image (110) dans la suite d'images ($s_n(x,y)$) sont recouvertes d'un paquet en fonction des pixels ($d_i(x,y)$) de la suite de données ($d_n(x,y)$).

8. Procédé selon une des revendications précédentes, **caractérisé en ce que**, dans le cas d'une modulation différentielle temporelle, la suite d'images ($s_n(x,y)$) composée de paires (112) d'images (110) identiques successives est formée avec des données graphiques ($s_i(x,y)$) identiques et que la suite d'images ($d_n(x,y)$) est composée de paquets spécifiques aux pixels ($d_i(x,y)$), dont chaque second paquet spécifique aux pixels ($d_{2i+1}(x,y)$) correspond, avec un signe inverse, au premier paquet spécifique aux pixels ($d2i(x,y)$) précédent et que chaque premier paquet spécifique aux pixels ($d_{2i}(x,y)$) recouvre chaque première image d'une paire d'image (112) et chaque second paquet spécifique aux pixels ($d_{2i+1}(x,y)$) recouvre à chaque seconde image de la paire d'image (112).

9. Procédé d'imagerie (1) de transmission optique de données (50) en espace libre (2) à un récepteur (3), **caractérisé en ce qu'**il est configuré pour l'exécution du procédé selon les revendications 1 à 8.

10. Procédé d'imagerie selon la revendication 9, **caractérisé en ce qu'**il est constitué d'un écran de télévision plat, d'un moniteur ou d'un écran graphique.

11. Caméra (5) apte à effectuer un enregistrement vidéo pour la réception de données (50) transmises optiquement en espace libre (2) par un émetteur (1), **caractérisée en ce qu'**elle est configurée pour, à partir des émissions lumineuses des pixels (4) de l'émetteur (1) commandées de façon modulée conformément au procédé selon l'une des revendications 1 à 8 décoder les bits de données (52) utilisés pour la modulation pour les reconvertir sous forme des données (50) originelles.

12. Caméra apte à effectuer un enregistrement vidéo selon la revendication 12, **caractérisée en ce qu'**elle est constituée de la caméra CMOS (5) d'un smartphone (3) ou d'une tablette.

Fig. 1

Fig. 2

Bildinhalte zum Zeitpunkt
$t=(m+1)\cdot T$: $b_{m+1}(x,y)$

Bildinhalte zum Zeitpunkt
$t=m\cdot T$: $b_m(x,y)$

Bildinhalte zum Zeitpunkt
$t=(m-1)\cdot T$: $b_{m-1}(x,y)$

Fig. 3

Fig. 4

EP 3 155 732 B1

$P_i =$ | $d_0$ | $d_1$ | $d_2$ | ... | $d_{L-1}$

52   51

$P_{i+1} =$ | $d_0$ | $d_1$ | $d_2$ | ... | $d_{L-1}$

52   51

$d_{1,1}(h)$

$h$

| $d_0$ | $d_1$ | $d_2$ | ... | $d_{1919}$ |
| $d_{1920}$ | $d_{1921}$ | $d_{1922}$ | ... | $d_{3838}$ |
| ... | ... | ... | ... | ... |
| ... | ... | ... | ... | ... |
| ... | ... | ... | ... | ... |
| ... | ... | ... | ... | ... |
| $d_{L-1920}$ | $d_{L-1919}$ | $d_{L-1918}$ | ... | $d_{L-1}$ |

$d_0$ | $d_1$ | $d_2$ | ... | $d_{1919}$
$d_{1920}$
...
...

$d_0$ | $d_1$ | $d_2$ | ... | $d_{1919}$
$d_{1920}$
...
...
...
$d_{L-1920}$

$d_i(x,y)$

$d_{i+1}(x,y)$

$d_h(x,y)$

$d_{L-1920}$

Fig. 4a

Fig. 4b

EP 3 155 732 B1

Fig. 5

EP 3 155 732 B1

EP 3 155 732 B1

$s_n(x, y)$   $a_n(x, y)$   $s^*_n(x, y)$

4a   4b   4c

102

$t_0$

| R | G | B | R | G | B | R | G | B |
|---|---|---|---|---|---|---|---|---|
| 27 | 88 | 57 | 33 | 94 | 65 | 45 | 96 | 68 |

| R | G | B | R | G | B | R | G | B |
|---|---|---|---|---|---|---|---|---|
| 4 | 4 | 4 | 4 | 4 | 4 | -4 | -4 | -4 |

| R | G | B | R | G | B | R | G | B |
|---|---|---|---|---|---|---|---|---|
| 31 | 92 | 61 | 37 | 98 | 69 | 41 | 92 | 64 |

t

1   1   0

112

$t_0+T$

| R | G | B | R | G | B | R | G | B |
|---|---|---|---|---|---|---|---|---|
| 27 | 88 | 57 | 33 | 94 | 65 | 45 | 96 | 68 |

| R | G | B | R | G | B | R | G | B |
|---|---|---|---|---|---|---|---|---|
| -4 | -4 | -4 | -4 | -4 | -4 | 4 | 4 | 4 |

| R | G | B | R | G | B | R | G | B |
|---|---|---|---|---|---|---|---|---|
| 23 | 84 | 53 | 29 | 90 | 61 | 49 | 100 | 72 |

$t_0+2T$

| R | G | B | R | G | B | R | G | B |
|---|---|---|---|---|---|---|---|---|
| 37 | 93 | 62 | 40 | 98 | 72 | 40 | 91 | 63 |

| R | G | B | R | G | B | R | G | B |
|---|---|---|---|---|---|---|---|---|
| 4 | 4 | 4 | -4 | -4 | -4 | 4 | 4 | 4 |

| R | G | B | R | G | B | R | G | B |
|---|---|---|---|---|---|---|---|---|
| 41 | 97 | 66 | 36 | 94 | 68 | 44 | 95 | 67 |

1   0   1

112

$t_0+3T$

| R | G | B | R | G | B | R | G | B |
|---|---|---|---|---|---|---|---|---|
| 37 | 93 | 62 | 40 | 98 | 72 | 40 | 91 | 63 |

| R | G | B | R | G | B | R | G | B |
|---|---|---|---|---|---|---|---|---|
| -4 | -4 | -4 | 4 | 4 | 4 | -4 | -4 | -4 |

| R | G | B | R | G | B | R | G | B |
|---|---|---|---|---|---|---|---|---|
| 33 | 89 | 58 | 44 | 102 | 76 | 36 | 87 | 59 |

Fig. 6

Fig. 7

EP 3 155 732 B1

Fig. 8

$s_n(x, y)$

| | 4a | | | 4b | | | 4c | | | 4d | | | 4e | | | 4f | |
|R|G|B|R|G|B|R|G|B|R|G|B|R|G|B|R|G|B|
|27|88|57|27|88|57|45|96|68|45|96|68|40|98|72|40|98|72|

102

$a_n(x, y)$

|R|G|B|R|G|B|R|G|B|R|G|B|R|G|B|R|G|B|
|-4|4|-4|4|-4|4|4|-4|4|-4|4|-4|-4|4|-4|4|-4|4|

1      0      1

$s*_n(x, y)$

|R|G|B|R|G|B|R|G|B|R|G|B|R|G|B|R|G|B|
|23|92|53|31|84|61|49|92|72|41|100|64|36|102|68|44|94|76|

113      113      113

EP 3 155 732 B1

Fig. 9

$s_k"(x,y)$

$s_i"(x,y)$

$s_{i-1}"(x,y)$

$[ d_0, d_1, ..., d_{L-1}]$

5

31

32

33

3

EP 3 155 732 B1

31

$s_k{''}(x,y)$

**32**

37

34

35

$[ d_0, d_1, ... , d_{L-1}]$

$s_{k-1}{''}(x,y)$

−

36

Kamerasteuerungsinformation

33

>

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050264694 A1
- US 6661905 B1